(19) Europäisches Patentamt
European Patent Office
Office européen des brevets

(11) EP 3 672 019 B1

(12) FASCICULE DE BREVET EUROPEEN

(45) Date de publication et mention
de la délivrance du brevet:
**22.09.2021 Bulletin 2021/38**

(51) Int Cl.:
*H02J 7/00* (2006.01)     *H02J 7/14* (2006.01)
*H02J 7/34* (2006.01)     *H02J 9/06* (2006.01)

(21) Numéro de dépôt: **19215509.1**

(22) Date de dépôt: **12.12.2019**

(54) **PROCÉDÉ ET DISPOSITIF DE COMMANDE DE RECHARGE ET DE DÉCHARGE DE BATTERIES D'UN ENSEMBLE DESDITES BATTERIES AVEC RECHARGE PARTIELLE D'UNE BATTERIE**

STEUERVERFAHREN UND -VORRICHTUNG DES AUF- UND ENTLADENS VON BATTERIEN EINER ANORDNUNG SOLCHER BATTERIEN MIT TEILWEISER AUFLADUNG EINER BATTERIE

METHOD AND DEVICE FOR CONTROLLING THE BATTERY RECHARGING AND DISCHARGE OF A SET OF SAID BATTERIES WITH PARTIAL RECHARGING OF A BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2018 FR 1873552**

(43) Date de publication de la demande:
**24.06.2020 Bulletin 2020/26**

(73) Titulaire: **ORANGE**
**92130 Issy-les-Moulineaux (FR)**

(72) Inventeurs:
• **MARQUET, Didier**
**92326 CHATILLON CEDEX (FR)**
• **FRANCOISE, Brian**
**92326 CHATILLON CEDEX (FR)**

(74) Mandataire: **Cabinet Beau de Loménie**
**158, rue de l'Université**
**75340 Paris Cedex 07 (FR)**

(56) Documents cités:
EP-A1- 2 246 956        DE-T5-112017 000 198
US-A1- 2017 214 266     US-A1- 2017 285 109
US-A1- 2017 358 934

EP 3 672 019 B1

**Description**

Technique antérieure

L'invention se rapporte au domaine général de batteries d'accumulateurs électriques rechargeables. Elle concerne plus particulièrement l'alimentation électrique de dispositifs électroniques situés dans des zones sans réseau électrique fiable, en d'autre mots, sans réseau électrique qui respecte des exigences strictes en termes de disponibilité et de stabilité de courant, de tension et/ou de puissance fournie.

Pour alimenter des dispositifs électroniques consommateurs dans des zones non couvertes par des réseaux électriques, une première solution consiste à utiliser des groupes électrogènes, par exemple des moteurs Diesel produisant de l'énergie électrique.

Cependant, les groupes électrogènes sont en général surdimensionnés par rapport à la puissance d'utilisation des dispositifs consommateurs qu'ils alimentent, ce qui conduit à un rendement assez faible et à une usure prématurée du groupe électrogène. A titre d'exemple, les puissances d'utilisation requises pour alimenter un équipement de télécommunications et un équipement de conditionnement d'air sont chacune de l'ordre de 1 à 4 kW. Dans ce cas, le taux moyen de charge d'un groupe électrogène qui alimente ces deux équipements est seulement compris entre 10 et 50%.

Une deuxième solution consiste à associer une batterie à un groupe électrogène pour former un système hybride d'alimentation HGB (pour « Hybrid Genset Battery » en anglais). Deux phases sont alternées : pendant une première phase, le groupe électrogène alimente les dispositifs consommateurs et recharge aussi la batterie, puis pendant une deuxième phase, le groupe électrogène est mis en arrêt et la batterie se décharge pour alimenter les dispositifs consommateurs. La première et la deuxième phase peuvent durer chacune quelques heures. Cette solution permet d'allonger la durée de vie du groupe électrogène en réduisant son temps de fonctionnement, le coût de sa maintenance et en le faisant fonctionner à plus haut taux de charge (puisqu'il alimente la batterie en plus des dispositifs consommateurs), idéalement à 75% pour obtenir une plus faible consommation de combustible.

Dans le cas de disponibilité d'un réseau électrique non fiable, par exemple à disponibilité réduite de quelques heures par jour, une troisième solution pour alimenter des dispositifs électroniques consommateurs consiste à associer une batterie au réseau électrique non fiable : la batterie se charge et est maintenue chargée tant que le réseau électrique est disponible en même temps que les dispositifs consommateurs sont alimentés par ce réseau électrique et lorsque le réseau électrique n'est plus disponible, la batterie se décharge pour alimenter les dispositifs consommateurs en autonomie de plusieurs heures. Cette solution permet d'assurer une alimentation continue des dispositifs consommateurs.

Toutefois, comme il n'est pas possible de contrôler l'état d'activité du réseau électrique non fiable, il n'est pas possible de garantir qu'une batterie soit chargée assez régulièrement complètement à saturation lorsque le réseau est inactif. Or pour les batteries à technologie plomb-acide, cette charge de saturation est une exigence du constructeur pour garantir une durée de vie spécifiée. Pour des batteries pouvant fonctionner en état de charge partielle, l'exigence est moindre car il faut seulement avoir assez d'énergie pour équilibrer la charge des éléments.

La deuxième et la troisième solution, se basant toutes les deux sur l'utilisation d'une batterie en alternance avec une autre source d'alimentation, présentent des inconvénients liés à la durée de vie des batteries, à leurs coûts et/ou à des contraintes d'utilisation de ces batteries.

En ce qui concerne les batteries actuellement disponibles et leurs utilisations :

les batteries les plus utilisées sont au Plomb-acide. Leur durée de vie en cycles de charge et de décharge est limitée en particulier à haute température ambiante telle qu'une température supérieure à 30°C. En Afrique par exemple, la durée de vie d'une batterie au Plomb rechargeable qui fait jusqu'à une dizaine de cycles de charge/décharge par semaine à 50 % de sa capacité n'est souvent que de 2 à 4 ans. Cependant, une batterie au Plomb peut comporter plusieurs branches mises en parallèle à des états de charge différents, ce qui permet de remplacer une branche défectueuse par une autre sans risque de coupure du système.

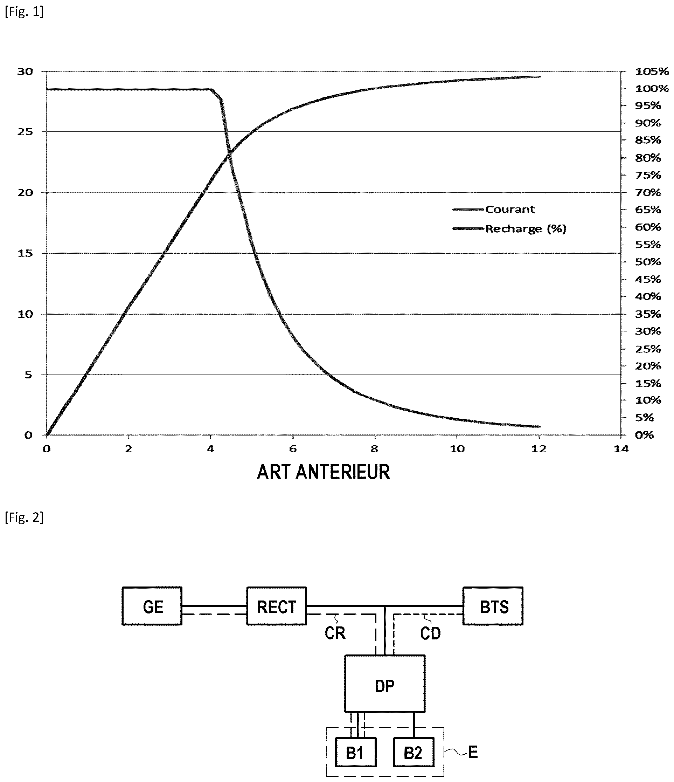

Les batteries au Plomb-acide présentent un autre inconvénient : le temps permettant de finir une recharge d'un niveau de charge élevé, de 95% par exemple, à un niveau de charge maximum, est relativement long. La figure 1 de l'art antérieur illustre, à titre d'exemple, des évolutions de niveau de charge, et d'intensité de courant requis pour la recharge d'une batterie au Plomb-acide ayant une profondeur de décharge DoD (pour « Depth of Discharge » en anglais) de 80%. Nous notons que les batteries au Plomb-acide peuvent être surchargées, i.e. rechargées à un niveau de charge supérieur à 100%. Dans l'exemple de la figure 1, la recharge du niveau de charge de 95% à 105% dure 5 heures et demie, tandis que sa recharge du niveau de 0% au niveau de 95% a duré 6 heures et demie. Aussi, la puissance requise pour recharger une batterie au Plomb-acide diminue au fur et à mesure que la batterie se recharge. De ce fait, lorsqu'une batterie au Plomb-acide est associée à un groupe électrogène, ce groupe fonctionne à faible taux de charge durant toute la phase de finalisation de la recharge de la batterie, du niveau de charge élevé (95% dans cet exemple) au niveau de charge maximum (105% dans cet exemple).

Les batteries Plomb-acide avancées permettent une recharge plus rapide que les batteries au Plomb-acide simples, en acceptant un plus fort régime de recharge grâce à l'utilisation de plaques plus fines. Par rapport aux batteries plomb-acide classiques, les batteries plomb-acide avancées permettent un plus grand nombre de cycles. Les batteries plomb-acide avancées permettent aussi des recharges partielles PSoC (pour « Partial State of Charge » en anglais) : plusieurs cycles partiels consécutifs avec des recharges à des niveaux de charge élevés mais inférieurs au niveau de charge maximal sont possibles, par exemple des recharges partielles jusqu'à 90 à 95%. Cependant, des recharges complètes (jusqu'à 102 à 105% par exemple) sont exigées après un certain nombre de cycles partiels. La fréquence de recharge complète dépend de la profondeur de décharge appliquée à la batterie, par exemple tous les 30 cycles pour une batterie ayant une DoD de 30%, et tous les 10 cycles pour une batterie ayant une DoD de 50%. Plus la DoD est profonde, plus souvent la batterie doit être rechargée complètement. Dans un système hybride d'alimentation HGB, l'utilisation d'une batterie au Plomb-acide avancée permet une réduction de l'utilisation du groupe électrogène grâce aux cycles partiels. En revanche, la batterie au Plomb-acide avancée est sollicitée davantage (par rapport à une batterie au Plomb-acide simple) car le temps de fonctionnement du groupe électrogène est réduit. Aussi, les batteries plomb-acide avancées nécessitent d'être rechargées au minimum jusqu'au niveau de charge de 90% à chaque cycle.

Des informations de constructeurs et des tests sur des batteries Lithium montrent que leur durée de vie peut atteindre de 6 à 7 ans en cycle profond i.e. en cycle de charge et décharge dans lequel la décharge est continue jusqu'à ce que la batterie atteigne sa coupure de tension basse, habituellement définie pour 70 à 90 % de décharge. Cependant les batteries Lithium ont un coût initial 3 à 4 fois supérieur à celui des batteries au Plomb et sont donc encore peu utilisées (quelques pourcents du marché). De plus, la mise en parallèle des batteries Lithium est assez complexe si ces batteries ne sont pas dans un même état de charge, i.e. à une même tension.

Les batteries Lithium n'autorisent pas les surcharges à cause d'un risque d'emballement thermique.

Les batteries Lithium permettent des recharges partielles PSoC. Une batterie Lithium ayant une DoD de 30% par exemple permet des recharges partielles à des niveaux de charge de l'ordre de 40% à 70%. Cependant, certaines batteries Lithium nécessitent aussi une recharge complète après un certain nombre de recharges partiels. Les batteries dites chaudes comme les batteries Sodium fondu ou les batteries Chlorure de Nickel ont un bon rendement électrochimique, mais leur rendement global avec un maintien en température à environ 300°C est de l'ordre de 50 à 75%. De plus, en cas de défaillance au niveau de l'autre source d'alimentation (le groupe électrogène ou le réseau électrique non fiable), il faut que le temps d'intervention ne dépasse pas le temps de refroidissement de la batterie chaude, car une batterie refroidie peut demander jusqu'à plusieurs jours pour remonter lentement en température afin de ne pas briser la céramique interne de la batterie. Les batteries chaudes ne sont donc utilisées qu'avec d'autres sources d'alimentation fiables et dans des zones rapidement accessibles pour la maintenance.

les batteries REDOX ou « à flux » telles que les batteries à flux de sels de vanadium oxydo-réducteur ont l'avantage de pouvoir ajouter de la capacité en augmentant la taille d'un réservoir externe de liquide. Mais ces batteries ont un rendement modeste en utilisation permanente à cause de fuites électriques entre des éléments en série via les fluides salins conducteurs utilisés et elles demandent beaucoup d'entretien. Par exemple, la batterie REDOX Zinc-Brome, doit être arrêtée une fois par semaine pour sa régénération et son nettoyage automatique interne. De plus, il n'a pas été proposé de fonctionnement en alternance des batteries REDOX avec une autre source d'alimentation.

De ce fait, même la deuxième et la troisième solutions décrites précédemment, qui utilisent une batterie dans un système HGB, ne sont pas satisfaisantes.

Il existe un besoin en une solution permettant d'alimenter des dispositifs électroniques consommateurs dans une zone ne disposant pas d'un réseau électrique fiable, et qui ne présente pas certains des inconvénients de l'état de la technique.

Exposé de l'invention

L'invention vise un procédé de commande de recharge et de décharge de batteries d'un ensemble desdites batteries, chacune de ces batteries étant reliée à un circuit électrique reliant une source d'alimentation, dite source principale, à un dispositif consommateur pour former :

-    un circuit électrique commandable, dit « de recharge partielle », reliant la batterie à la source d'alimentation ; et
-    un circuit électrique commandable, dit « de décharge principale », reliant la batterie au dispositif consommateur et réalisant une fonction diode pour éviter un courant de circulation entre les batteries, la source principale pouvant produire une énergie électrique d'une façon intermittente ;

au moins une première batterie de l'ensemble étant reliée à une autre source d'alimentation, dite source secondaire, par un circuit électrique commandable dit « de recharge de saturation » ; ledit procédé comprend :

-    une recharge partielle de la première batterie par ladite source principale jusqu'à un niveau de charge déterminé inférieur à un niveau de charge maximal de ladite première batterie, ladite recharge partielle comprenant une fermeture dudit circuit électrique de recharge partielle de ladite première batterie ; et
-    une recharge de saturation de ladite première batterie (B1) par ladite source secondaire (SOL, WND, B2) jusqu'au dit niveau de charge maximal, ladite recharge de saturation comprenant une fermeture dudit circuit électrique de recharge de saturation et une ouverture desdits circuits électriques de recharge partielle et de décharge principale de ladite première batterie,

ledit procédé étant tel que le dispositif consommateur est alimenté par la source principale, et/ou par la source secondaire, et/ou par une décharge principale d'une dite batterie ; ladite décharge principale d'une dite batterie comprenant une ouverture du circuit électrique de recharge partielle et une fermeture du circuit électrique de décharge principale de cette batterie.

Corrélativement, l'invention vise un dispositif de commande de recharge et de décharge de batteries d'un ensemble desdites batteries, chacune de ces batteries étant destinée à être reliée à un circuit électrique reliant une source d'alimentation, dite source principale, à un dispositif consommateur pour former un circuit électrique commandable, dit de recharge partielle, reliant la batterie à la source d'alimentation principale et un circuit électrique commandable, dit de décharge principale, reliant la batterie au dispositif consommateur et réalisant une fonction diode pour éviter un courant de circulation entre les batterie,

la source principale pouvant produire une énergie électrique d'une façon intermittente ;
au moins une première batterie de l'ensemble étant destinée à être reliée à une autre source d'alimentation, dite source secondaire, par un circuit électrique commandable dit « de recharge de saturation » , le dispositif de commande comporte un module de couplage configuré pour commander:

- une recharge partielle de la première batterie par la source principale jusqu'à un niveau de charge déterminé inférieur à un niveau de charge maximal de la première batterie, ladite recharge partielle comprenant une fermeture du circuit électrique de recharge partielle de la première batterie ;
- une recharge de saturation de la première batterie par ladite source secondaire jusqu'audit niveau de charge maximal, la recharge de saturation comprenant une fermeture du circuit électrique de recharge de saturation et une ouverture desdits circuits électriques de recharge partielle et de décharge principale de la première batterie ; et
- une décharge principale d'une dite batterie comprenant une ouverture du circuit électrique de recharge partielle et une fermeture dudit circuit électrique de décharge principale de cette batterie,

le dispositif de commande étant configuré pour alimenter le dispositif consommateur par la source principale, et/ou par la source secondaire, et/ou par une décharge principale d'une dite batterie.

Ainsi, selon l'invention le dispositif consommateur est alimenté sans coupure, autrement dit en continu, par la source d'alimentation principale, et/ou par la source d'alimentation secondaire, et/ou par la décharge d'une batterie.

Selon l'invention, le dispositif consommateur est distinct de la source d'alimentation principale et de la source d'alimentation secondaire.

Les caractéristiques et avantages du procédé de commande selon l'invention présentés ci-après s'appliquent de la même façon au dispositif de commande selon l'invention, et vice versa.

Conformément à l'invention, la source principale peut produire de l'énergie électrique à partir d'une énergie non renouvelable telle qu'une énergie fossile comme le pétrole, le gaz et le charbon, ou une énergie nucléaire. Dans un mode de réalisation, la source principale est un groupe électrogène formant, avec l'ensemble des batteries, un système d'alimentation hybride HGB.

Au sens de l'invention, la recharge partielle d'une batterie est une phase durant laquelle la batterie est alimentée électriquement par la source d'alimentation principale et emmagasine de l'énergie électrique. Durant cette phase, le niveau de charge de la batterie augmente.

Au sens de l'invention, la décharge principale d'une batterie est une phase durant laquelle la batterie restitue de l'énergie électrique, pour alimenter le dispositif consommateur. Durant cette phase, le niveau de charge de la batterie décroît.

Les valeurs nominales de capacité et de tension d'une batterie sont celles définies par le constructeur de la batterie conformément à une norme.

La fonction diode associée à une batterie permet d'éviter un courant de circulation entre cette première batterie et une deuxième batterie au sens de l'invention. On rappelle qu'un tel courant de circulation inter-batteries peut se produire lorsque les batteries ne sont pas à un même niveau de charge, et lorsque le circuit de recharge ou le circuit de décharge d'une première batterie est fermé simultanément avec la fermeture du circuit de décharge d'une deuxième batterie. On peut noter que ce courant de circulation inter-batteries peut être beaucoup plus élevé que le courant de décharge des batteries, et peut donc les détruire.

Par exemple, considérons un accumulateur à plaque fine au Plomb pur de 100 Ah (Ampère-heure) chargé à 2,1 V de force électromotrice, et ayant une résistance interne de 5 mOhms. Lorsque cet accumulateur se décharge de plus de la moitié de sa capacité en décharge pendant un régime de 3 heures (3h) en délivrant un courant de l'ordre de 33 Ampères (A), il aura après décharge une tension de 1,9V, et sa résistance interne aura augmenté de quelques mOhms, par exemple de 8 mOhms. Considérons deux batteries de 48V nominal comprenant chacune 24 accumulateurs précédents en série. Si ces deux batteries sont connectées en parallèle, le courant de circulation inter-batteries pourrait atteindre 24xdifférenceDeTension/RésistanceInterne=24*(2,1-1,9 V)/(5 + 8 mOhms), soit 369 Ampères. Un tel courant inter-batteries serait 10 fois plus élevé que le courant de décharge et de charge (33A) observé en régime 3h. Cet exemple représente un cas d'usage courant pour les systèmes hybrides de type HGB.

Grâce à la fonction diode, l'invention permet d'éviter un tel courant de circulation entre les batteries. Elle protège ainsi les batteries et allonge leur durée de vie.

Au sens de l'invention, un cycle d'une batterie comporte au moins une recharge partielle et une décharge principale de cette batterie.

Conformément à l'invention, au moins la première batterie accepte les recharges partielles; une telle batterie peut être par exemple une batterie au Plomb-acide avancée ou une batterie Lithium.

L'invention permet d'éviter d'activer la source principale pour une longue durée et à un faible taux de charge, pour recharger une batterie du niveau de charge déterminé pouvant être atteint par la recharge partielle, jusqu'au niveau de charge maximal de la batterie.

Ainsi, l'invention permet de réduire le coût total de possession TCO (pour « Total Cost of Ownership » en anglais) et les dépenses d'exploitation OPEX (pour « OPerational EXpenditure » en anglais) de la source principale, grâce à la diminution du temps d'utilisation de cette source et ainsi la diminution de la fréquence de sa maintenance.

L'invention permet aussi de réduire la consommation de l'énergie non renouvelable (pétrole, gaz, charbon) à partir de laquelle la source principale produit de l'énergie électrique. L'invention permet donc de réduire la pollution et l'émission du $CO_2$ par la source principale.

Au sens de l'invention, chaque batterie de l'ensemble peut être reliée à une ou plusieurs sources d'alimentation et à un ou plusieurs dispositifs consommateurs.

Au sens de l'invention, une batterie peut comporter une seule branche ou plusieurs branches de même tension fonctionnant en parallèle et faites de blocs. Par exemple, une batterie peut comporter deux branches en parallèle de 48V, chaque branche comportant quatre blocs de 12V chacun.

Dans un mode de réalisation, le procédé de commande comporte en outre une étape de comptage, pour chaque batterie de l'ensemble, d'un nombre de cycles effectués pour cette batterie qui comprennent chacun une recharge partielle. La recharge de saturation de la batterie est mise en œuvre au bout d'un nombre déterminé des cycles.

Dans un mode de réalisation, la recharge partielle de la première batterie comporte en outre une ouverture du circuit électrique de décharge principale de cette batterie. Dans un autre mode, lorsque le circuit électrique de décharge principale de la première batterie est fermé, ce circuit de décharge principale sera court-circuité pendant une recharge partielle de la première batterie.

Dans un mode de réalisation, le procédé de commande conforme à l'invention comporte en outre une décharge dite secondaire de la première batterie pour une recharge de saturation d'une deuxième batterie de l'ensemble. La première batterie constitue une source secondaire, au sens de l'invention, pour la deuxième batterie. La décharge secondaire de la première batterie comprend une ouverture du circuit de recharge partielle de cette première batterie. Le circuit électrique de recharge de saturation de la deuxième batterie constitue un circuit électrique de « décharge secondaire » pour la première batterie.

Ce mode permet d'utiliser une batterie de l'ensemble pour recharger en saturation une autre batterie.

Dans un mode de réalisation, la première batterie en décharge secondaire, est aussi en décharge principale. Ce mode permet donc d'exploiter la première batterie simultanément pour recharger en saturation la deuxième batterie, et aussi pour alimenter le dispositif consommateur.

Les circuits électriques de recharge partielle, de recharge de saturation, de décharge principale et de décharge secondaire d'une batterie peuvent être commandés indépendamment l'un de l'autre. L'indépendance des circuits de charge et de décharge permet d'introduire une redondance.

Dans un autre mode de réalisation, la source secondaire est une source pouvant produire de l'électricité à partir d'une énergie renouvelable, comme une énergie solaire, éolienne, hydraulique ou géothermique.

Dans un mode de réalisation, la recharge de saturation d'une batterie peut être effectuée simultanément par une décharge secondaire d'une autre batterie et par une source secondaire produisant de l'électricité à partir d'une énergie renouvelable.

Dans un mode de réalisation, le procédé de commande conforme à l'invention comprend :

- une première séquence comportant une recharge de saturation, au moins une recharge partielle, et au moins une décharge principale, pour la première batterie ;
- une deuxième séquence comportant une recharge de saturation, au moins une recharge partielle, et au moins une décharge principale, pour une autre batterie de l'ensemble, dite troisième batterie; les deux séquences étant ajustées temporellement pour assurer l'alimentation continue via les circuits de décharge principale des première et troisième batteries.

Chacune des deux séquences comporte d'une part, un ou plusieurs cycles de recharge partielle et de décharge principale, et d'autre part une recharge de saturation. Ainsi, ce mode permet à chacune des deux batteries d'être rechargée jusqu'à son niveau de charge maximal après un certain nombre de cycles de recharges partielles.

Aussi, ce mode permet d'assurer l'alimentation continue du dispositif consommateur par la décharge principale de la première ou de la troisième batterie, ou par la source principale lorsque celle-ci est active.

Dans un mode de réalisation, le procédé de commande conforme à l'invention comprend en outre, pour au moins une batterie de l'ensemble, une séquence cyclique comportant :

- au moins une dite recharge, partielle ou de saturation, suivie d'une mise au repos ; et/ou
- au moins une dite décharge, principale ou secondaire, suivie d'une mise au repos,

ladite mise au repos comportant une ouverture desdits circuits électriques de ladite batterie.

Au sens de l'invention, la mise au repos d'une batterie est sa déconnexion de toute source d'alimentation et de tout dispositif consommateur. Durant cette phase, un niveau de charge de la batterie reste constant.

Ce mode permet en particulier d'allonger la durée de vie des batteries grâce au temps de repos qui sépare les phases de recharge et de décharge et/ou vice versa. En effet, les batteries de l'ensemble sont rechargées ou déchargées en alternance.

Des tests expérimentaux ont pu mettre en évidence une réduction du vieillissement en termes de perte de capacité par cycles grâce à la mise au repos entre les phases de recharge et de décharge des accumulateurs au Lithium et ceci même en les faisant travailler à 100% de leur capacité nominale.

Par exemple, à une température 35 et 45 °C et sur 1000 cycles de recharge et décharge, la mise au repos d'une batterie entre 15 et 30 minutes entre les phases de recharge et de décharge et vice versa permet de réduire la pente de vieillissement d'une dizaine de pourcentages à quelques pourcentages. Dans ces conditions, la durée de vie de la batterie peut atteindre plus de 10 ans. L'utilisation des batteries Lithium peut être alors privilégiée par rapport aux batteries en Plomb vu que sur une telle longue durée de vie, il y aura un retour sur l'investissement du coût initial.

La mise au repos de la batterie peut permettre de réduire la température de la batterie, ce qui améliore sa durée de vie, mais aussi réduit le besoin de mettre en marche un équipement de refroidissement de la batterie, tel qu'un climatiseur. L'invention permet donc de réduire la consommation énergétique.

Dans un mode de réalisation, au moins une séquence parmi ladite première et ladite deuxième séquence, comporte en outre une mise au repos de la batterie correspondante. La mise au repos des batteries est introduite sans réduire l'alimentation du dispositif consommateur.

Les batteries de l'ensemble peuvent avoir des capacités nominales différentes ou une même capacité nominale.

Dans un mode préféré, au moins une batterie dudit ensemble est de type Lithium. Comme mentionné précédemment, la batterie Lithium offre des cycles profonds, travaille entre 80 et 100 % de capacité nominale, et a une plus longue durée de vie que les autres types de batteries. De plus, l'allongement de la durée de vie de la batterie Lithium grâce à sa mise au repos permet d'avoir un retour sur l'investissement sur le coût initial de la batterie Lithium.

Dans un mode préféré, au moins une batterie dudit ensemble est de type Lithium ou Nickel (par exemple NiCd, NiZn ou NiMH) acceptant suffisamment de puissance en recharge et en décharge pour qu'une seule batterie dudit ensemble puisse d'une part, fournir l'ensemble de la puissance demandée par le dispositif consommateur et d'autre part, accepter la puissance maximale de la source d'alimentation.

La capacité de l'ensemble de batteries selon l'invention peut être égale à la capacité d'une seule batterie conformément à une solution d'alimentation de l'art antérieur. Le fait d'avoir un ensemble d'au moins deux batteries ne résulte pas à une augmentation du coût des batteries par rapport aux solutions de l'art antérieur.

Dans un mode de réalisation, la mise au repos n'est pas ajoutée systématiquement après chaque recharge et après chaque décharge. Il est possible de mettre une batterie au repos après chaque recharge de cette batterie par exemple, ou après chaque décharge, ou après un nombre donné de cycles. Le gain en termes de durée de vie d'une batterie diminue lorsque ce nombre de cycles augmente.

Dans un mode de réalisation, le procédé de commande comprend en outre, de manière alternée entre au moins deux batteries de l'ensemble, une séquence comportant :

- au moins une recharge, partielle ou de saturation, suivie d'une mise au repos ; et
- au moins une décharge, principale ou secondaire, suivie d'une mise au repos ;

les durées des recharge, décharge et mises au repos de cette séquence pouvant être différentes pour chacune des batteries.

L'invention permet donc d'alimenter le dispositif consommateur tout en allongeant la durée de vie de chacune des batteries alternées.

Dans un mode de réalisation, la recharge de saturation d'une batterie n'est pas effectuée par la source d'alimentation principale. Ce mode permet donc de réduire la consommation d'énergie, notamment la consommation des combustibles lorsque la source d'alimentation principale est un groupe électrogène.

Dans un mode de réalisation de l'invention, le procédé de commande comprend en outre une étape d'inspection d'une information représentative d'un état d'activité de la source principale. Tant que l'état de la source d'alimentation est actif, la recharge partielle de la première batterie est mise en œuvre jusqu'au niveau de charge déterminé, le dispositif consommateur étant alimenté par la source d'alimentation. Tant que l'état de la source d'alimentation est inactif, le dispositif consommateur est alimenté par la source secondaire et/ou par la décharge principale d'une batterie.

Dans un mode de réalisation de l'invention, le procédé de commande comprend en outre une étape de surveillance d'une information représentative d'un état d'activité de la source principale.

Dans un mode de réalisation de l'invention, le procédé de commande comprend en outre une étape de vérification de la disponibilité de la source secondaire.

Dans un mode de réalisation de l'invention, le dispositif de commande conforme à l'invention comprend en outre un module de vérification configuré pour surveiller une information représentative d'un état d'activité de la source principale et/ou pour vérifier une disponibilité de la source secondaire.

Dans un mode de réalisation, le procédé de commande conforme à l'invention comporte en outre une étape d'obtention d'au moins une information représentative d'un niveau de charge d'une batterie de l'ensemble pour déterminer la batterie en recharge de saturation, ou en recharge partielle ou en décharge principale ou en décharge secondaire .

La détermination de la batterie à laquelle une recharge ou une décharge est appliquée, est basée alors sur des informations précises sur le niveau de charge de chaque batterie, ce qui réduit les risques de sélectionner pour la décharge, une batterie qui n'est pas assez chargée pour pouvoir alimenter le dispositif consommateur et/ou recharger en saturation une autre batterie, ou de sélectionner pour la recharge, une batterie ayant déjà un niveau de charge alors qu'il existe une autre batterie en besoin plus important de recharge.

L'information représentative d'un niveau de charge d'une batterie peut être obtenue par exemple par des mesures physiques, ou par des estimations telles que des calculs faits par des algorithmes d'apprentissage machine.

L'information représentative d'un niveau de charge d'une batterie au Lithium peut être obtenue par le dispositif de commande par réception de cette information en provenance d'une entité BMS (pour « Battery Management System » en anglais) associée à cette batterie.

Dans un autre mode, déterminer une batterie à laquelle une recharge ou une décharge est appliquée, se fait d'une façon systématique en alternance entre les différentes batteries de l'ensemble en se basant sur un chronomètre par exemple, ou sur une période de disponibilité de la source d'alimentation.

Dans un mode de réalisation, une durée d'activité et une durée d'inactivité de la source d'alimentation principale sont déterminées au préalable; autrement dit, ces durées sont prédéfinies. Par exemple, les durées d'activité et d'inactivité peuvent être déterminées à des valeurs constantes. La source principale peut être activée ou désactivée d'une façon alternée et suivant les durées de l'activité et de l'inactivité. Ce mode permet d'avoir une commande simple et périodique.

Dans un autre mode de réalisation, la durée d'activité et la durée d'inactivité de la source d'alimentation sont déterminées en fonction de l'au moins une information représentative du niveau de charge d'une batterie.

Ce mode de réalisation permet d'optimiser les gains en termes de durées de vie des batteries et de la source d'alimentation principale car il se base sur des informations de niveaux de charge des batteries. Ce mode permet aussi de garantir la disponibilité d'alimentation pour le dispositif consommateur.

Dans un mode de réalisation, le dispositif de commande conforme à l'invention comporte en outre un module de surveillance configuré pour obtenir au moins une information représentative d'un niveau de charge d'une batterie, pour déterminer une batterie à recharger ou à décharger.

Dans un mode de réalisation, le dispositif de commande conforme à l'invention comporte en outre un module de contrôle configuré pour contrôler l'état d'activité de la source d'alimentation principale.

Dans un mode de réalisation, les circuits électriques de recharge partielle, de recharge de saturation, de décharge principale et de décharge secondaire correspondants à une batterie de l'ensemble sont compris dans le dispositif de commande, ou dans un même boitier physique que le dispositif de commande. Dans un autre mode, ces circuits électriques ne font pas partie du dispositif de commande, mais sont commandés par le module de couplage du dispositif de commande.

L'invention vise également un système de commande de recharge et de décharge de batteries d'un ensemble desdites batteries, chacune de ces batteries étant reliée à un circuit électrique reliant une source d'alimentation principale à un dispositif consommateur pour former un circuit électrique commandable, dit de recharge partielle, reliant la batterie à la source d'alimentation et par un circuit électrique commandable, dit de décharge principale, reliant la batterie au dispositif consommateur et réalisant une fonction diode pour éviter un courant de circulation entre les batteries, la source principale pouvant produire une énergie électrique d'une façon intermittente, au moins une première batterie de l'ensemble étant reliée à une autre source d'alimentation, dite source secondaire, par un circuit électrique commandable dit « de recharge de saturation », le système comportant:

- un dispositif de commande conforme à l'invention, tel que décrit précédemment ;
- la source d'alimentation principale ;

- la source secondaire ; et
- le dispositif consommateur.

Le dispositif de commande en fonctionnement est tel que le dispositif consommateur est alimenté par la source principale, la source secondaire, et/ou par la décharge d'une batterie.

Dans un mode de réalisation, la source d'alimentation principale est un générateur électrique ou un groupe électrogène.

Dans un mode de réalisation, la source secondaire est une source pouvant produire de l'énergie électrique à partir d'une énergie renouvelable, comme un panneau solaire ou une éolienne, ou une batterie de l'ensemble, en décharge secondaire. Plusieurs types de sources secondaires sont alors envisageables.

Dans un mode de réalisation, le dispositif consommateur est une station de base de communications sans fil ou un dispositif médical.

L'invention peut être donc mise en œuvre pour alimenter des équipements de télécommunications et donc d'assurer une couverture d'un réseau de télécommunications dans des zones qui ne se disposent pas d'un réseau électrique fiable, telle que les zones rurales ou des zones avec des conditions géographiques, climatiques ou économiques difficiles.

L'invention peut aussi être mise en œuvre pour alimenter, dans des telles zones, des dispositifs médicaux ayant des exigences en termes de disponibilité d'alimentation, nécessitant par exemple une disponibilité permanente.

L'invention peut aussi être mise en œuvre pour alimenter, dans des telles zones, d'autres dispositifs avec des contraintes moins exigeantes.

L'invention vise également un programme d'ordinateur sur un support d'enregistrement, ce programme étant susceptible d'être mis en œuvre dans un ordinateur ou dans un dispositif de commande conforme à l'invention, ce programme comportant des instructions adaptées à la mise en œuvre d'un procédé de commande tel que décrit ci-dessus.

Ce programme peut utiliser n'importe quel langage de programmation, et être sous la forme de code machine, code source, code objet, ou de code intermédiaire entre code source et code objet, tel que dans une forme partiellement compilée, ou dans n'importe quelle autre forme souhaitable.

En particulier, ce programme peut être exécuté par un microcontrôleur μC (« micro-Controller » en anglais).

L'invention vise aussi des supports d'information ou d'enregistrement lisibles par un ordinateur, et comportant des instructions du programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution du procédé de commande selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1, déjà décrite, illustre des évolutions de niveau de charge et d'intensité de courant requis pour recharger une batterie au Plomb-acide de l'art antérieur ;

[Fig. 2] La figure 2 illustre un système de commande de deux batteries conformément à un mode de réalisation ;

[Fig. 3] La figure 3 est un organigramme représentant des étapes d'un procédé de commande conformément au mode de réalisation de l'invention présenté à la figure 2 ;

[Fig. 4] La figure 4 est un chronogramme représentant des niveaux de charge de batteries commandées selon le procédé de commande dont les étapes sont présentées à la figure 3 ;

[Fig. 5] La figure 5 illustre des architectures fonctionnelles d'un système et dispositif de commande, conformes à l'invention, selon un mode de réalisation permettant une recharge de saturation d'une batterie par une autre batterie;

[Fig. 6] La figure 6 illustre des architectures fonctionnelles d'un système et dispositif de commande, conformes à l'invention, selon un autre mode de réalisation permettant une recharge de saturation d'une batterie par une autre batterie;

[Fig. 7] La figure 7 illustre des architectures fonctionnelles d'un système et dispositif de commande, conformes à l'invention, selon un mode de réalisation permettant une recharge de saturation d'une batterie par une source secondaire différente d'une batterie de l'ensemble ;

[Fig. 8] La figure 8 illustre des architectures fonctionnelles d'un système et dispositif de commande, conformes à l'invention, selon un autre mode de réalisation permettant une recharge de saturation d'une batterie par une source secondaire différente d'une batterie de l'ensemble;

[Fig. 9] La figure 9 illustre des architectures fonctionnelles d'un système et dispositif de commande, conformes à l'invention, selon un mode de réalisation hybride entre les modes des figues 5 et 7 ;

[Fig. 10] La figure 10 illustre des architectures fonctionnelles d'un système et dispositif de commande, conformes à l'invention, selon un mode de réalisation hybride entre les modes des figues 6 et 8 ;

[Fig. 11] La figure 11 est un chronogramme représentant des niveaux de charge de batteries pilotées selon un procédé de commande conformément à deux modes de réalisation ; et

[Fig. 12] La figure 12 illustre l'architecture matérielle d'un dispositif de commande selon un mode de réalisation de l'invention.

## Description des modes de réalisation

La **figure 2** illustre une architecture d'un système de commande d'un ensemble E de batteries B1 et B2, le système étant conforme à l'invention. Chacune de ces batteries B1 et B2 est reliée à un circuit électrique reliant une source d'alimentation principale GE à un dispositif consommateur BTS pour former :

- un circuit électrique commandable, CR, de recharge partielle reliant la batterie à la source d'alimentation GE ; et
- un circuit électrique commandable, CD, de décharge principale reliant la batterie au dispositif consommateur BTS.

La source principale peut produire une énergie électrique d'une façon intermittente.

Dans le mode décrit ici, chacune des deux batteries, B1 et B2, constitue une autre source d'alimentation, dite source secondaire, et elle est reliée à l'autre batterie par un circuit électrique commandable dit « de recharge de saturation ».

Le circuit électrique de recharge de saturation de la batterie B1 constitue un circuit électrique de « décharge secondaire » pour la batterie B2. De la même façon, le circuit électrique de recharge de saturation de la batterie B2 constitue un circuit électrique de décharge secondaire pour la batterie B1.

Le système comporte:

- un dispositif de commande DP conforme à l'invention;
- la source d'alimentation principale GE;
- la source secondaire, comportant d'une façon alternée, l'une des batteries B1 ou B2 ; et
- le dispositif consommateur BTS.

Dans ce mode de réalisation, la source d'alimentation principale est un groupe électrogène formant avec les batteries B1 et B2 un système d'alimentation hybride de type HGB. Les deux batteries B1 et B2 sont de type Lithium ou Plomb-acide avancées, permettant des recharges partielles. Le dispositif consommateur BTS est une station de base d'un réseau de télécommunications.

Le système de commande est situé dans une zone rurale ne disposant pas d'un réseau électrique. Une alimentation électrique permanente (sans coupure i.e. sans interruption) du dispositif consommateur BTS est requise pour assurer une couverture réseau dans cette zone rurale.

Le dispositif de commande DP met en œuvre un procédé de commande conforme à l'invention pour commander la recharge et la décharge des batteries B1 et B2. Le dispositif de commande DP commande des recharges partielles des batteries par la source principale GE, à des niveaux de charge $NR_{MIN}$ strictement inférieurs à des niveaux $NR_{MAX}$ de charge maximaux de ces batteries, afin d'éviter l'activation de la source principale GE à un faible taux de charge lors d'une recharge lente d'une batterie d'un niveau $NR_{MIN}$ à un niveau $NR_{MAX}$, De plus, le dispositif de commande DP commande une décharge secondaire de l'une des batteries (Bl par exemple) pour une recharge de saturation de l'autre batterie (B2) du niveau de charge $NR_{MIN}$ au niveau de charge $NR_{MAX}$.

Dans cet exemple, des redresseurs RECT (pour « rectifier » en anglais) sont placés à la sortie de la source GE pour convertir un courant alternatif AC généré par la source principale GE en un courant continu DC.

En ce qui suit, nous désignons par « commander une recharge ou une décharge d'une batterie », commander les circuits électriques de recharge et de décharge de cette batterie.

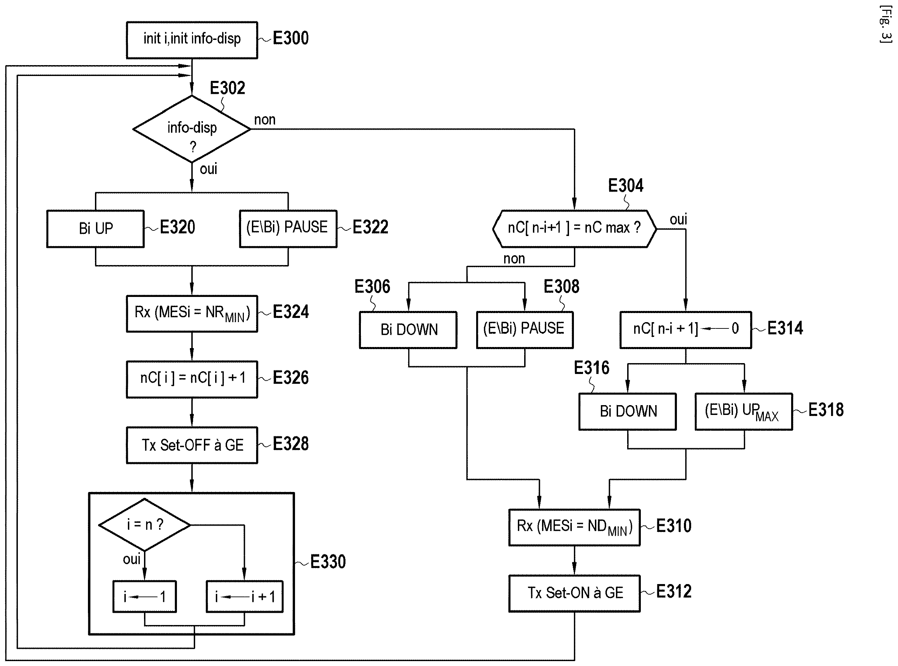

La **figure 3** est un organigramme représentant des étapes d'un procédé de commande d'un ensemble E de deux batteries B1 et B2 conformément à un mode de réalisation de l'invention. Le procédé est mis en œuvre par le dispositif de commande DP conforme à l'invention et compris dans le système de commande décrit en référence à la figure 2.

Dans ce mode de réalisation, le dispositif consommateur BTS est alimenté soit par le groupe électrogène GE, soit par une décharge principale de l'une des batteries B1 ou B2.

Dans ce mode de réalisation, le dispositif de commande DP commande les batteries B1 et B2 de l'ensemble E, mais aussi l'état d'activité du groupe électrogène GE.

Le procédé est initié au cours d'une étape E300, en considérant par exemple que la dernière batterie Bi ayant été mise au repos est la batterie B1 et que la source d'alimentation GE est initialement en un état inactif. L'indice « i » est un entier positif compris entre 1 et le nombre de batteries de l'ensemble E, c'est-à-dire entre 1 et 2 dans cet exemple, initialisé au cours de l'étape E300 à la valeur 1. L'état d'activité du groupe électrogène GE est initialisé au cours de l'étape E300 à être inactif.

Nous supposons qu'initialement, les batteries B1 et B2 sont chargées à un niveau de charge élevé $NR_{MIN}$, mais inférieur au niveau de charge complète $NR_{MAX}$ de 100%. Le niveau $NR_{MIN}$ est de 90% dans cet exemple.

Au cours d'une étape E302, le dispositif de commande DP obtient une information info-disp représentative de l'état d'activité de la source d'alimentation principale GE, cette information étant fournie par le dispositif de commande lui-même. Cette information indique que la source GE est en état inactif.

Dans le mode décrit ici, un compteur nC[i] de nombre de cycles est associé à chaque batterie Bi de l'ensemble, chaque cycle comprenant une recharge partielle, conformément à l'invention, et une décharge principale, conformément à l'invention. Le dispositif de commande DP utilise ces compteurs nC[i] pour commander, pour chaque batterie Bi, une recharge de saturation après un nombre déterminé nCmax de cycles comportant chacun une recharge partielle.

Dans ce mode de réalisation, lorsque l'état de la source principale est inactif et que l'indice i désigne une batterie particulière par exemple B1, le dispositif de commande vérifie au cours d'une étape E304 si le compteur nC[n-i+1] associé à l'autre batterie de l'ensemble, B2 dans cet exemple, a atteint le nombre maximal nCmax.

Nous supposons qu'au cours de l'étape E304, le dispositif de commande DP a vérifié que le compteur nC[2] n'a pas atteint la valeur nCmax.

Afin d'alimenter le dispositif consommateur BTS, le dispositif DP commande au cours d'une étape E306 les circuits électriques de la batterie B1 pour sa décharge principale jusqu'à un niveau de charge déterminé $ND_{MIN}$, de 50% par exemple.

Simultanément à la décharge E306, au cours d'une étape E308, le dispositif DP met au repos la batterie B2, en commandant l'ouverture des circuits de la batterie B2 pour sa mise au repos.

Au cours d'une étape E310, le dispositif de commande DP reçoit une information MES1 représentative du niveau de charge de la batterie B1. Cette information indique que le niveau de charge de la batterie B1 a atteint le niveau de charge $ND_{MIN}$ de 50%.

Dans le mode décrit ici, dès qu'une batterie est déchargée jusqu'au niveau $ND_{MIN}$, le dispositif de commande DP commande sa recharge partielle, conformément à l'invention, par la source principale GE jusqu'au niveau de charge $NR_{MIN}$ de 90%. En effet, les batteries B1 et B2 autorisent les recharges partielles.

Pour maintenir l'alimentation du dispositif consommateur BTS, le dispositif DP commande, au cours d'une étape E312 la mise en marche du groupe électrogène GE. Le dispositif consommateur BTS est alors alimenté directement par la source d'alimentation principale GE.

Suite à l'étape 312 et au cours d'une nouvelle itération de l'étape E302, l'information info-disp indique alors que l'état d'activité de la source d'alimentation GE est actif. La valeur de l'indice i est encore 1.

Au cours d'une étape E320, le dispositif DP commande une recharge partielle de la batterie B1 jusqu'à un niveau de charge $NR_{MIN}$, et simultanément, au cours d'une étape E322, une mise au repos de la batterie B2.

Nous notons que le groupe électrogène GE alimente à la fois le dispositif consommateur BTS et la batterie B1.

Au cours d'une étape E324, le dispositif de commande DP reçoit une information MES1 représentative du niveau de charge de la batterie B1, cette information indiquant que cette batterie B1 est chargée au niveau $NR_{MIN}$.

Après chaque recharge d'une batterie Bi jusqu'au niveau $NR_{MIN}$. le dispositif de commande DP incrémente au cours d'une étape E326 le compteur nC[i] de nombre de cycles associé à cette batterie Bi. Dans cet exemple, le compteur nC[l] associé à la batterie B1 est incrémenté.

Sur réception de l'information MES1, le dispositif DP commande au cours d'une étape E328 la désactivation de la source principale GE.

Les étapes E326 et E328 peuvent être mises en œuvre simultanément ou l'une après l'autre peu importe celle qui précède qui l'autre.

Au cours d'une étape E330, le dispositif de commande DP modifie le nombre entier i pour changer à chaque itération de batterie relative à l'étape de décharge principale (E306) et par la suite à l'étape de recharge partielle (E320). Si l'entier i est égal au nombre de batteries n, alors i est réinitialisé à 1, sinon i est incrémenté d'une unité.

Le procédé se reboucle à partir de l'étape E302. L'état de la source principale GE est inactif.

Dans cet exemple, la nouvelle valeur de l'entier i est 2. Le dispositif de commande vérifie au cours de l'étape E304 si le compteur nC[n-i+1] associé à l'autre batterie de l'ensemble, B1 dans cet exemple, a atteint le nombre maximal nCmax. Nous supposons que c'est le cas (nC[1] = nCmax), le dispositif de commande DP met à zéro le compteur nC[n-i+l] au cours d'une étape E314, et commande une décharge secondaire, conformément à l'invention, de la batterie repérée par l'indice i (B2) au cours d'une étape E316 jusqu'au niveau de charge $ND_{MIN}$ et une recharge de saturation, conformément à l'invention, de l'autre batterie (B1) au cours d'une étape E318 simultanée avec l'étape E316, jusqu'au niveau de charge $NR_{MAX}$.

Au cours des étapes E316 et E318, la batterie B1 est rechargée par la batterie B2 de son niveau de charge $NR_{MIN}$ jusqu'au niveau $NR_{MAX}$. En effet, nous rappelons qu'avant de désactiver (E328) la source principale GE, le dispositif de commande DP a obtenu (E324) la mesure MES1 indiquant que le niveau de charge de la batterie B1 est $NR_{MIN}$.

Les étapes E316 et E318 sont suivies par l'étape E310 décrite précédemment.

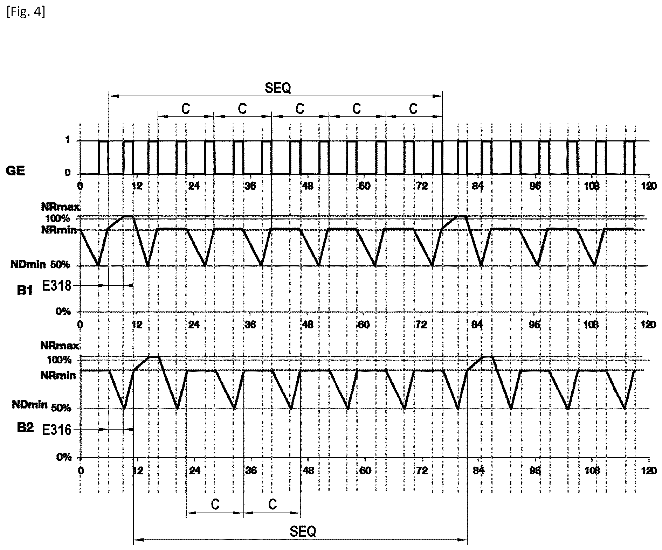

La **figure 4** est un chronogramme représentant les différentes étapes du procédé de commande conformément au mode de réalisation de l'invention décrit en référence à la figure 3. Ce chronogramme représente l'évolution des niveaux de charge des batteries B1 et B2 en fonction du temps, en heures.

Les deux batteries B1 et B2 ont une même tension nominale et une même capacité nominale. La somme des capacités des batteries B1 et B2 peut correspondre approximativement à celle d'un système HGB classique de l'art antérieur. Nous rappelons qu'un système d'alimentation HGB de l'art antérieur comporte une batterie unique ou plusieurs batteries branchées en parallèle et fonctionnant en parallèle aussi bien en recharge qu'en décharge.

La décharge principale de la batterie B1 (E306) et la mise au repos de la batterie B2 (E308) durent sur la figure 4 de l'instant 0 jusqu'à la 4ème heure.

L'étape E312 d'activation de la source GE est mise en œuvre à la 4ème heure.

La recharge partielle de la batterie B1 (E320) et la mise au repos de la batterie B2 (E322) durent de la 4ème heure jusqu'à la 6ème heure. A la 6ème heure, l'étape E328 est mise en œuvre pour désactiver le groupe électrogène.

La boucle est reprise à partir de la 6ème heure avec une nouvelle mise en œuvre de l'étape E302 après la modification E330 de l'indice i de la valeur 1 à la valeur 2.

La décharge secondaire de la batterie B2 (E316) simultanée avec la recharge de saturation de la batterie B1 (E318) est marquée sur la figure 4. Ces étapes E316 et E318 durent de la 6ème à la 10ème heure. Dans cet exemple, le nombre nCmax est égal à 6.

A la 10ème heure, l'état de la source principale GE est activé (E312) pour une recharge partielle (E320) de la batterie B2, simultanée avec une mise au repos (E322) de la batterie B1.

Dans ce mode de réalisation, une séquence cyclique C d'une durée de 12 heures est appliquée à la batterie B1, comportant une mise au repos (qui dure 6 heures), une décharge principale (qui dure 4 heures), puis une recharge partielle (qui dure 2 heures).

Dans ce mode de réalisation, une séquence cyclique C d'une durée de 12 heures est appliquée à la batterie B1, comportant une mise au repos (qui dure 6 heures), une décharge principale (qui dure 4 heures), puis une recharge partielle (qui dure 2 heures).

En outre, la séquence cyclique C est appliquée de manière alternée entre les batteries B1 et B2. L'application de cette séquence cyclique à la batterie B2 est décalée de 6 heures par rapport à son application à la batterie B1.

Dans ce mode de réalisation, une autre séquence cyclique SEQ est appliquée de manière alternée entre les batteries B1 et B2.

La séquence SEQ comporte :

- une recharge de saturation, qui dure 4 heures, par une décharge secondaire de l'autre batterie de l'ensemble ;
- une mise au repos qui dure 2 heures ;
- une décharge secondaire, qui dure 4 heures, pour recharger en saturation l'autre batterie de l'ensemble;
- une recharge partielle ; et
- cinq fois la séquence C déjà décrite.

Dans ce mode de réalisation, comme les batteries B1 et B2 ont une même capacité, les durées de recharge partielle, de recharge de saturation, de décharge principale, de décharge secondaire et de mise au repos sont identiques pour les deux batteries.

Dans ce mode de réalisation, le dispositif de commande DP active (E312) la source GE dès que le niveau de charge de l'une des batteries B1 ou B2 est considéré comme faible ($ND_{MIN}$). En variante, le dispositif de commande DP peut activer la source GE uniquement lorsque toutes les batteries B1 et B2 ont le niveau de charge $ND_{MIN}$.

Dans ce mode, comme chaque batterie B1 et B2 a une capacité moitié de celle d'une batterie d'un système HGB de l'art antérieur, la source GE démarre deux fois plus souvent, mais son temps de fonctionnement est le même. Selon des données de fabricants des groupes électrogènes, jusqu'à une dizaine de démarrages par jour ne réduit pas la durée de vie d'un groupe électrogène GE et de son démarreur.

Un homme du métier peut configurer initialement les niveaux de charge des batteries B1 et B2 et les valeurs des compteurs nC[i] pour mettre en œuvre le procédé illustré par l'organigramme de la figure 3. Par exemple, une configuration initiale peut consister à installer la batterie B1 au niveau de charge $NR_{MAX}$ et la batterie B2 au niveau $NR_{MIN}$, désactiver la source principale GE, et à fixer la valeur de l'indice i à 1, le compteur nC[1] associé à la batterie B1 à 0 et le compteur nC[2] associé à la batterie B2 à nCmax, tel que l'état à l'heure 12.

Autres modes de réalisation

Le mode de réalisation déjà décrit peut avoir différentes variantes, par exemple sur les choix des niveaux de charge qui déclenchent la recharge ou la décharge d'une batterie.

Dans un mode de réalisation, le système de commande comporte plusieurs sources principales d'alimentation, d'un même type ou de types différents.

Dans un mode de réalisation, le système de commande comporte au moins deux sources d'alimentation principales dont une est un générateur de type Stirling. Ce type de générateur peut couvrir la puissance d'utilisation, c'est-à-dire alimenter le dispositif consommateur BTS, mais pas la recharge des batteries.

La source principale d'alimentation peut rester active pendant une recharge de saturation d'une batterie.

Le dispositif consommateur peut être un dispositif autre qu'une station de base BTS ou un dispositif médical HOSP. Le dispositif consommateur est un dispositif électronique qui requiert d'être alimenté électriquement avec un seuil minimum de disponibilité et/ou un seuil minium de stabilité au niveau de l'intensité de courant, de la tension ou de la puissance électrique qui l'alimente.

Dans un mode de réalisation, le système de commande comporte plusieurs dispositifs consommateurs.

Dans un mode de réalisation, au moins une des batteries B1 et B2 pilotées par le dispositif de commande est de type Plomb, ou Nickel ou une batterie chaude.

Les batteries B1 et B2 de l'ensemble E de batteries ne sont pas forcément d'une même technologie.

Dans un mode de réalisation, les données mes1, mes2, mes3 représentatives des niveaux de charge des batteries de l'ensemble E sont basées sur des mesures de courant ou de tension au niveau des batteries.

Dans un mode de réalisation, les données mes1, mes2, mes3 représentatives des niveaux de charge des batteries de l'ensemble E sont basées sur des estimations, en utilisant par exemple des algorithmes d'apprentissage machine (« machine learning » en anglais).

Dans un mode de réalisation, les données mes1, mes2, mes3 représentatives des niveaux de charge des batteries sont basées sur des compteurs à rebours temporel. Par exemple, il peut être estimé que la batterie B1, dont le niveau de charge est présenté à la figure 4, se décharge (décharge principale) du niveau $NR_{MIN}$ au niveau $ND_{MIN}$ au bout de 4 heures, et se recharge partiellement du niveau $ND_{MIN}$ au niveau $NR_{MIN}$ en 2 heures.

Dans un mode de réalisation, le système de commande comporte en outre une source secondaire d'alimentation différente d'une batterie de l'ensemble, par exemple une source produisant de l'énergie électrique à partir d'une énergie renouvelable, comme un panneau solaire ou une éolienne. La source secondaire peut être utilisée :

- seule ou avec la source principale pour une recharge partielle d'une batterie ; et/ou

- seule ou avec une batterie en décharge secondaire pour une recharge de saturation d'une autre batterie.

Description d'un dispositif de commande conforme à l'invention

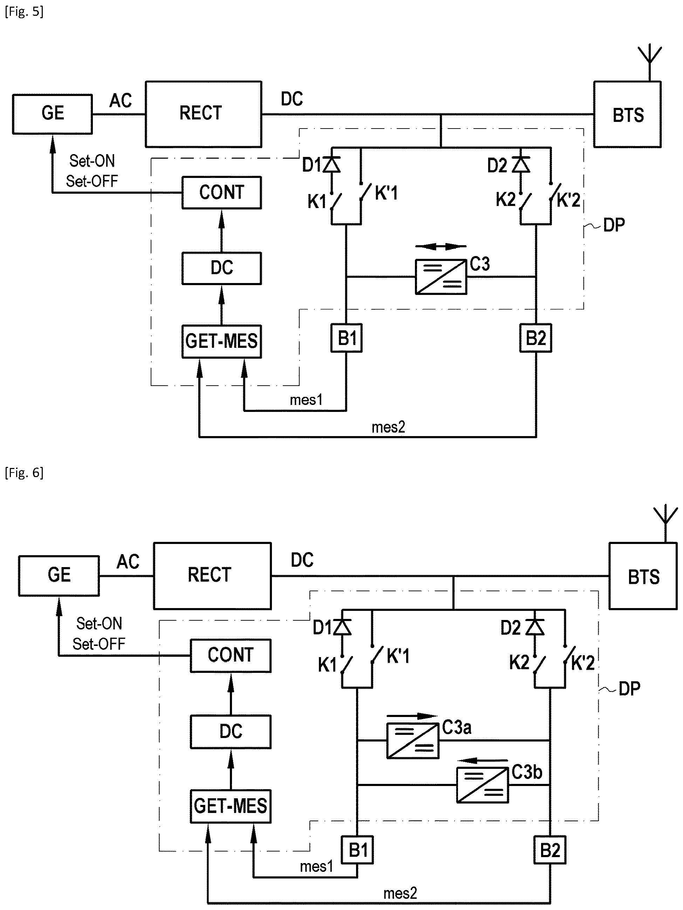

La figure 5 présente une architecture fonctionnelle, selon un mode de réalisation de l'invention, d'un système de commande SYS, conforme à l'invention, comportant le dispositif de commande DP, conforme à l'invention, une source principale d'alimentation GE, un ensemble de deux batteries B1 et B2, et un dispositif consommateur BTS.

Le dispositif de commande DP pilote l'ensemble des deux batteries B1 et B2 qui peuvent chacune être connectée à la source d'alimentation principale GE, et au dispositif consommateur BTS.

Le dispositif de commande DP comporte :

- un module de couplage DC ;
- des moyens de connexion K1, K'1 (et K2, K'2) et une fonction diode D1 (et D2) formant des circuits électriques de recharge partielle CR et de décharge principale CD de la batterie B1 (et de B2), reliant cette batterie à la source GE et au dispositif consommateur BTS;
- un convertisseur C3 bidirectionnel reliant la batterie B1 à la batterie B2, et formant à chacune des batteries un circuit électrique de recharge de saturation (lorsqu'elle est en recharge de saturation par l'autre batterie) ou un circuit de décharge secondaire (lorsqu'elle est en décharge secondaire pour recharger l'autre batterie) ;
- un module de surveillance GET-MES; et
- un module de contrôle CONT.

Les moyens de connexion K1, K'1 relatifs à la batterie B1 sont configurés pour assurer une connexion électrique entre la batterie B1 et la source d'alimentation principale GE pour recharger partiellement la batterie (circuit CR), ou assurer une connexion électrique entre la batterie B1 et le dispositif consommateur BTS pour une décharge principale de la batterie (circuit CD) pour alimenter ce dispositif consommateur BTS, ou déconnecter électriquement la batterie B1 de la source d'alimentation et du dispositif consommateur.

En effet, deux circuits en parallèle sont relatifs à chaque batterie. Pour la batterie B1 par exemple, le circuit comportant les moyens K1 et D1 en série, appelé circuit de décharge principale CD, permet le passage d'un courant électrique pour la décharge de la batterie B1, alors que le circuit comportant le moyen K'1, appelé circuit de recharge partielle CR, permet le passage d'un courant électrique pour la recharge partielle de la batterie B1 par la source principale GE. Lors des phases de décharge principale, le circuit de décharge principale peut être optimisé en fermant K'1 pour éviter les pertes Joule dans la diode.

Dans ce mode de réalisation, les moyens de connexion K1, K'1, K2 et K'2 sont des interrupteurs de puissance. Ces interrupteurs peuvent être électromécaniques tel qu'un relais ou électroniques tel qu'un transistor MOS.

Les interrupteurs, par exemple K1 et K'1 peuvent être commandés indépendamment l'un de l'autre. Ainsi, par exemple, la décharge peut intervenir soit en fermant K1 soit en fermant K'1.

Les fonctions diodes D1 et D2 peuvent être des diodes passives ou des interrupteurs commandés, par exemple un transistor piloté par un circuit électronique réalisant la même fonction qu'une diode passive.

Lorsque le convertisseur C3 est commandé pour transférer une éventuelle puissance de la batterie B2 à la batterie B1 (le circuit électrique de recharge partielle de B1 est ouvert) et lorsque l'interrupteur K1 (respectivement K2) est fermé, la diode D1 (respectivement D2) permet la décharge principale instantanée de la batterie B1 (respectivement B2) et donc d'obtenir une alimentation sans interruption quand la source principale d'alimentation GE ne fournit plus de courant. Si les batteries n'ont pas une même masse commune, le convertisseur C3 doit avoir une fonction d'isolation.

La fermeture de l'interrupteur K'1 (respectivement K'2) permet de mettre en recharge partielle la batterie B1 (respectivement B2), mais aussi lors des phases de décharge principale d'éliminer par dérivation les pertes Joules et la chute de tension dans la fonction diode D1 (respectivement D2) dues à la tension de seuil de la fonction diode D1 (respectivement D2).

L'ouverture du couple K1 et K1' (respectivement K2 et K2') permet d'arrêter toute décharge en dessous d'un seuil critique de tension pour l'électrochimie en dessous duquel il y a risque d'irréversibilité des réactions dans les éléments, notamment par métallisation en dendrite et court-circuit interne avec échauffement et départ de réaction d'oxydation ou combustion incontrôlable.

L'ouverture du couple K1 et K'1 (respectivement K2 et K'2) et la commande du convertisseur C3 pour ne pas transférer de puissance dans les deux sens ce qui permet de mettre au repos la batterie B1 (respectivement B2).

Le module de couplage DC est configuré pour commander:

- une recharge partielle d'une batterie Bi par la source principale GE jusqu'à un niveau de charge déterminé inférieur à un niveau de charge maximal de cette batterie;
- une recharge de saturation de la batterie Bi jusqu'audit niveau de charge maximal par la source secondaire, qui est dans ce mode de réalisation l'autre batterie de l'ensemble ; et
- une décharge principale de la batterie Bi pour alimenter le dispositif consommateur BTS.

La recharge de saturation d'une batterie Bi comprend une fermeture de son circuit électrique de recharge de saturation et une ouverture de ses circuits électriques de recharge partielle et de décharge principale.

Le module de couplage DC commande la mise en marche, l'arrêt et le sens du transfert de puissance du convertisseur C3.

Dans ce mode de réalisation présenté à la figure 5, les moyens de connexion KI, K'1, K2, K'2, D1 et D2 sont compris dans le dispositif de commande DP. Dans un autre mode, ces moyens sont compris dans un autre dispositif ou un autre boitier que le dispositif de commande DP, mais sont commandés par le module de couplage DC du dispositif de commande DP.

Le module de contrôle CONT est configuré pour contrôler l'état d'activité de la source principale d'alimentation GE.

Le module de surveillance GET-MES est configuré pour obtenir au moins une information mes1 (resp. mes 2) représentative d'un niveau de charge d'une batterie B1 (resp. B2), pour déterminer, en fonction de cette information mes1 (ou mes2), quelle batterie parmi B1 et B2 à recharger ou à décharger.

Dans un mode de réalisation, la source principale est un réseau électrique N_ELEC.

La **figure 6** présente une architecture fonctionnelle du dispositif DP compris dans le système de commande SYS, conformes à l'invention, selon un autre mode de réalisation. Dans ce mode, comme dans le mode décrit précédemment, une batterie en décharge secondaire est utilisée pour recharger en saturation une autre batterie.

Dans le mode illustré par la figure 6, le circuit de recharge de saturation de la batterie B1 comporte un convertisseur C3b, unidirectionnel à fonction d'élévation de tension avec éventuellement une isolation. Le circuit de recharge de saturation de la batterie B2 comporte un convertisseur C3a, unidirectionnel à fonction d'élévation de tension avec éventuellement une isolation en tête bêche du convertisseur C3b, formant ainsi la fonction réalisée par un convertisseur bidirectionnel avec éventuellement une isolation, comme le convertisseur C3 décrit en référence à la figure 5. Le module de couplage DC commande la mise en marche et l'arrêt des convertisseurs C3a et C3b.

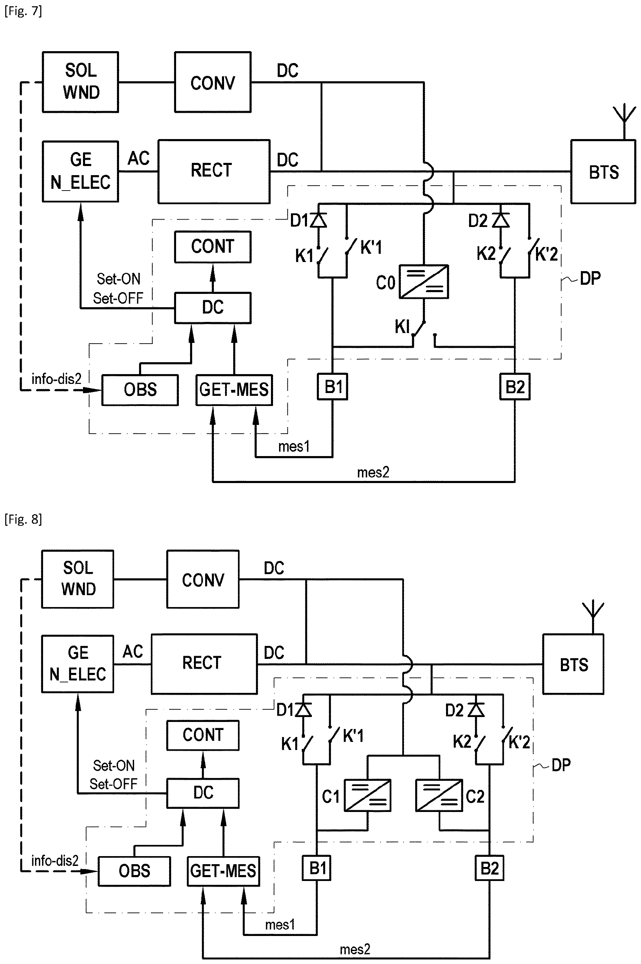

Les **figures 7 et 8** présentent chacune une architecture fonctionnelle d'un dispositif DP compris dans un système de commande SYS, conformes à l'invention, selon des modes de réalisation dans lesquels le système de commande comporte en plus de la source principale GE, une source secondaire d'alimentation SOL ou WND qui est différente d'une batterie de l'ensemble (ni B1 ni B2). Le dispositif DP commande les recharges de saturation des batteries par la source secondaire SOL ou WND.

Dans les modes de réalisation décrits ici, la source secondaire SOL ou WND produit de l'énergie électrique à partir d'une énergie renouvelable, elle peut comporter un ou plusieurs panneaux d'énergie solaire (SOL) ou éolienne (WND). La source SOL est par exemple un convertisseur photovoltaïque qui produit une tension continue DC variable. La source WND est par exemple un convertisseur éolien électromécanique qui produit une tension AC dont la valeur de la tension et la fréquence dépendent de sa vitesse de rotation. Un convertisseur CONV ou un régulateur peut être placé à la sortie de la source secondaire SOL (ou WND) pour adapter un courant DC (ou AC) généré par la source secondaire SOL (ou WND) en un courant de type DC régulé. Le convertisseur CONV et le redresseur RECT peuvent être mis en parallèle mais ce n'est pas indispensable pour obtenir la charge de saturation et auto-consommer l'excédent d'énergie, celle-ci pouvant circuler à travers C0, C1, C2 selon la configuration considérée.

Le dispositif de commande DP commande pour chaque batterie Bi, une recharge de saturation par la source secondaire SOL d'un niveau de charge NR$_{MIN}$ à un niveau de charge maximal NR$_{MAX}$ après un nombre nCmax déterminé de cycles comprenant chacun au moins une recharge partielle par la source principale GE, ne dépassant pas le niveau NR$_{MIN}$.

Dans ces modes, chacune des batteries B1 et B2, est reliée à la source secondaire SOL par un circuit électrique commandable de saturation.

Pour commander une recharge de saturation d'une batterie Bi, le module de couplage DC du dispositif de commande DP est configuré pour commander une fermeture du circuit électrique de saturation et une ouverture des circuits électriques de recharge partielle et de décharge, principale et secondaire, de cette batterie Bi.

Dans le mode illustré par la figure 7, le circuit de saturation comporte un convertisseur de tension C0, en série avec les batteries B1 et B2, et un aiguilleur KI. Le module de couplage DC commande l'aiguillage de l'aiguilleur KI vers la batterie à recharger par la source secondaire SOL ou son ouverture par rapport à toutes les batteries, la mise en marche et l'arrêt du convertisseur C0.

Dans le mode illustré par la figure 8, le circuit de saturation comporte deux convertisseurs de tension, C1 et C2, associés chacun à une des batteries B1 et B2.

Dans un mode de réalisation, la source secondaire est une éolienne WND.

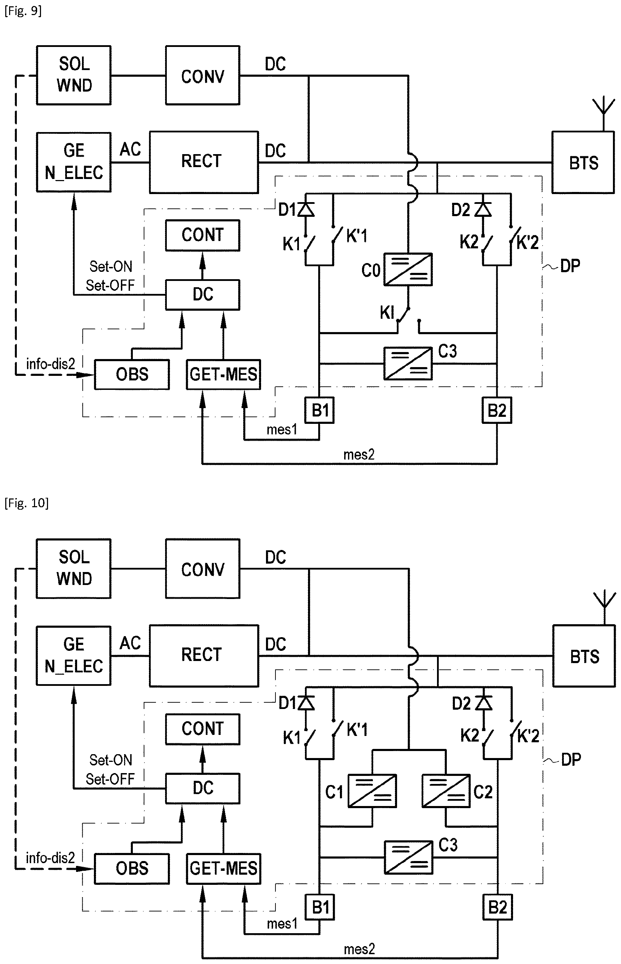

Les **figures 9 et 10** présentent chacune une architecture fonctionnelle d'un dispositif DP compris dans un système de commande SYS, conformes à l'invention, selon des modes de réalisation dans lesquels le système de commande SYS comporte en plus de la source principale GE, une source secondaire SOL différente d'une batterie de l'ensemble. Dans ces modes, le dispositif DP peut commander une recharge de saturation d'une batterie par la source secondaire SOL et/ou par l'autre batterie de l'ensemble.

L'architecture de la figure 9 est une architecture hybride de celle de la figure 5 et celle de la figure 7. L'architecture de la figure 10 est une architecture hybride de celle de la figure 6 et celle de la figure 8.

Dans un mode de réalisation, le dispositif de commande DP comporte un module de vérification OBS configuré pour vérifier une disponibilité de la source secondaire SOL.

Dans un mode de réalisation, lorsque le compteur nC[i] associé à une batterie Bi atteint le nombre nCmax, le dispositif de commande DP obtient, par son module de vérification OBS, une information info-disp2 sur la disponibilité de la source secondaire SOL. Si la source secondaire SOL est disponible, le dispositif de commande DP commande la recharge de saturation de la batterie Bi par la source secondaire SOL. Sinon, il commande la recharge de saturation de la batterie Bi par l'autre batterie de l'ensemble.

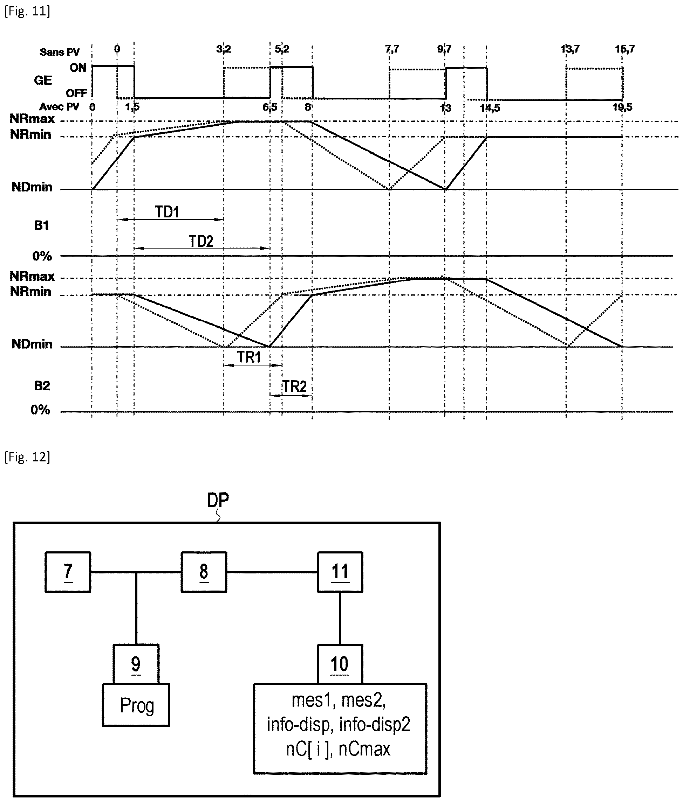

La **figure 11** est un chronogramme représentant les différentes étapes du procédé de commande conformément à deux modes de réalisation de l'invention. Ce chronogramme représente l'évolution des niveaux de charge des batteries B1 et B2 en fonction du temps, en heures.

Le premier mode correspond au mode décrit en référence à la figure 4; le procédé de commande conforme à ce premier mode, peut être mis en œuvre par un dispositif de commande DP dont l'architecture est celle de la figure 5 ou de la figure 6. Les niveaux de charge correspondant à ce mode sont présentés en traits pointillés sur la figure 11. Le dispositif de commande DP commande une recharge de saturation de la batterie B1 par la batterie B2 qui en décharge secondaire, de l'instant 0 à l'heure 3.2. La durée de la décharge secondaire de la batterie B2 selon ce premier mode est notée TD1. Ensuite, le dispositif de commande DP commande une recharge partielle de la batterie B2 par la source principale GE, de l'heure 3.2 à l'heure 5.2. La durée de la recharge partielle de la batterie B2 selon ce premier mode est notée TR1.

Dans le deuxième mode, le système de commande comporte en plus une source secondaire d'alimentation, SOL de type panneau solaire. Les niveaux de charge correspondant à ce mode sont présentés en traits continus. Dans ce mode, tant que la source secondaire SOL est disponible, elle est utilisée :

- en plus de la source principale GE pour les recharges partielles des batteries du niveau ND$_{MIN}$ au niveau NR$_{MIN}$ ;
- pour la recharge de saturation d'une batterie (B1 par exemple) en plus de l'autre batterie (B2) de l'ensemble, l'autre batterie (B2) étant en décharge secondaire; et
- pour l'alimentation du dispositif consommateur BTS en plus de la source principale GE ou d'une batterie en décharge principale.

Le procédé de commande conforme à ce deuxième mode, peut être mis en œuvre par un dispositif de commande DP dont l'architecture est celle de la figure 9 ou de la figure 10.

La durée de la décharge de la batterie B2 selon le deuxième mode est notée TD2, elle dure de l'heure 1.5 jusqu'à l'heure 6.5. Durant cette décharge, en premier lieu (de l'heure 1.5 à l'heure 3.2), la batterie B2 charge, avec la source secondaire SOL, la batterie B1 et alimente le dispositif consommateur BTS (décharge principale et secondaire), puis en deuxième lieu (de l'heure 3.2 à l'heure 6.5) la batterie B2 continue à alimenter le dispositif BTS jusqu'à ce que son niveau de charge soit égal à $ND_{MIN}$ (décharge principale uniquement).

Dans le deuxième mode, les durées des cycles sont moins contrôlées car la disponibilité de la source secondaire SOL (sa production d'énergie) ne peut pas être contrôlée. Les temps présentés sur la figure 11 sont données à titre indicatif.

Dans un mode de réalisation, la disponibilité de la source secondaire intermittente SOL est prédite à l'aide d'un algorithme. Ce mode permet d'adapter la périodicité des recharges de saturation, par exemple en l'avançant d'un ou plusieurs cycles, afin de maximiser le rendement de la source secondaire et l'utilisation de l'énergie renouvelable.

A une même puissance de la source principale GE, le temps de recharge partielle TR2 du 2ème mode, en présence de la source secondaire SOL, est plus court que celui du premier mode, TR1. Dans cet exemple, TR2 est égal à 1 heure et demie, alors que TR1 est égale à 2 heures.

Pour mettre en œuvre le 2ème mode, lors du dimensionnement du système, il est nécessaire de s'assurer que les batteries acceptent le surplus de puissance avec un régime de charge plus élevé, car elles seront rechargées par deux sources dont le contrôle de la source secondaire SOL n'est pas totalement maîtrisé dans le temps. Le dispositif de commande DP peut limiter la puissance du groupe électrogène GE en favorisant la source secondaire SOL sans pour autant dégrader le rendement optimal du groupe électrogène GE.

Dans cet exemple, le temps de décharge de la batterie B2 selon le premier mode, TD1 est de 4 heures. Dans le deuxième mode, le temps de décharge TD2 est de 5 heures. En effet, l'apport de la source secondaire SOL réduit la contribution des batteries, le temps de décharge est alors plus long pour la même batterie B2 (même profondeur de décharge DoD).

Architecture matérielle du dispositif de commande DP

Dans les modes de réalisation décrits ici, le dispositif de commande DP conforme à l'invention a l'architecture d'un ordinateur, telle qu'illustrée à la figure 14. Elle comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif de commande DP selon l'invention constitue un support d'enregistrement conforme à l'invention, lisible par le processeur 7 et sur lequel est enregistré un programme d'ordinateur Prog conforme à l'invention.

La mémoire 10 du dispositif de commande DP permet d'enregistrer des variables utilisées pour l'exécution des étapes de l'invention, telles que les données mes1, mes2, mes3 représentatives des niveaux de charge des batteries, les informations info-disp représentatives des états d'activité des sources d'alimentation, une valeur d'un compteur à rebours temporel TIMER utilisé pour estimer un niveau de charge d'une batterie.

Le programme d'ordinateur Prog définit des modules fonctionnels et logiciels, configurés pour piloter des batteries. Ces modules fonctionnels s'appuient sur et/ou commandent les éléments matériels 7-11 du dispositif de commande DP cités précédemment.

Sur l'obtention d'une information représentative d'un niveau de charge :

Le niveau de charge SoC (pour « State of Charge » en anglais) d'une batterie peut être exprimé en pourcentage par le rapport entre la charge disponible Q dans la batterie et la capacité Cmax maximale de cette batterie.

La charge Q et le niveau de charge SoC peuvent être déterminés à partir de la tension de la batterie si elle reflète l'état de recharge.

La tension est haute en fin de recharge, par exemple supérieure à 3,45V x k pour des batteries au Lithium Fer Phosphate (LFP), k étant le nombre d'éléments en série pour constituer la batterie.

La tension est basse en fin de décharge, par exemple inférieure 3 V x k pour ces types de batteries.

Pour certaines technologies de batteries, la tension n'est pas un indicateur suffisamment précis pour les états de recharge intermédiaires et on peut compléter cette mesure par un compteur cumulant la charge Q à un instant donné, cette charge Q étant supposée contenue dans la batterie et bornée entre 0 et la valeur maximum de capacité Cmax.

Le calcul de la charge Q utilise au moins des mesures de courant et de temps, voire d'autres mesures comme la température et d'autres informations mémorisées comme des données de références du constructeur ou des données historiques acquises pendant l'utilisation de la batterie.

Dans un mode de réalisation, la charge Q à un instant t+dt est exprimée par :
$$Q(t+dt) = Q(t) + r.I.dt; \text{ où}$$

- I est l'intensité du courant de recharge (positif par convention) ou de décharge (négatif par convention) dans la batterie mesurée par des moyens connus de l'art antérieur du domaine de l'électronique, tels que la tension sur un shunt ou le capteur à effet Hall, et utilisés par l'unité de contrôle/commande ;
- dt est un intervalle de temps de mesure avec un courant supposé constant ou bien lissé sur cet intervalle par moyenne simple ou par calcul de valeur efficace, en utilisant par exemple une méthode de calcul de type RMS (pour « Root Mean Square » en anglais) ;
- r est le rendement estimé; ce rendement r peut avoir une valeur constante, par exemple 95%, ou être variable ; ce rendement r peut dépendre de nombreux paramètres, tels que :

un état de la batterie en décharge ou en recharge, selon le sens du courant dans la batterie ;

un état de recharge, par exemple le rendement de charge peut s'effondrer en fin de la recharge ;

une température de la batterie, par exemple un rendement plus faible à froid ;

un régime de recharge ou de décharge, par exemple un ratio entre le courant et la capacité nominale Cnom tel que I= Cnom /3 et le rendement est plus faible à fort régime ;

un état de santé de la batterie décrite par la performance résiduelle en capacité et puissance ou résistance interne.

L'état de santé est affecté par l'âge de la batterie appelé aussi le vieillissement calendaire, l'historique de cyclage, la température, le temps passé à différentes profondeurs de décharge, le courant de recharge, les éventuels abus subis (surcharge, sous-décharge, court-circuit), le mauvais entretien, etc.

Le niveau de recharge peut être exprimé par :

$$Q= Cmax . max (min (0\%, Q(t+dt)), 100\%)$$

où Cmax vaut par exemple 90 % de la capacité nominale Cnom définie à un régime de courant d'échange et une température donnée entre la fin de recharge et la fin de décharge définie par le fabriquant, par exemple 100 Ah à 25°C après une recharge à 30 A de batterie jusqu'à 3,55V x k plus une heure à cette tension constante et jusqu'à 2,85V x k en décharge à 30 A.

Dans un mode de réalisation, pour une meilleure précision du calcul, la valeur maximale est corrigée, par exemple en fonction de la capacité nominale de la batterie, ou en fonction de l'état de santé, ou de la température.

Dans un mode de réalisation, les mesures de niveaux de charge d'une batterie peuvent être acquises préalablement par une entité BMS associée à cette batterie.

Dans un mode de réalisation, les informations mes1 ou mes2 sont récupérées via une liaison de communication, par exemple une liaison de type analogique, modbus, CAN, FIP, Ethernet ou d'un autre type.

Dans un mode de réalisation, au moins une batterie B1 est en Lithium. Les deux circuits en parallèle, de recharge et de décharge, comprenant les moyens K1, K'1 et D1 relatifs à cette batterie B1 sont compris dans l'entité électronique de gestion BMS associée à la batterie B1.

## Revendications

1. Procédé de commande de recharge et de décharge de batteries (B1, B2) d'un ensemble (E) desdites batteries (B1, B2), chacune desdites batteries étant reliée à un circuit électrique reliant une source d'alimentation, dite source principale, à un dispositif consommateur pour former :

- un circuit électrique commandable (CR) dit « de recharge partielle » reliant ladite batterie à ladite source principale (N-ELEC, GE) ; et
- un circuit électrique commandable (CD) dit « de décharge principale » reliant ladite batterie audit dispositif consommateur (BTS, HOSP) et réalisant une fonction diode pour éviter un courant de circulation entre les batteries,

ladite source principale pouvant produire une énergie électrique d'une façon intermittente;
au moins une première batterie (B1) dudit ensemble étant reliée à une autre source d'alimentation (SOL, WND, B2), dite source secondaire, par un circuit électrique commandable dit « de recharge de saturation » ;

ledit procédé comprend :

- une recharge partielle (E320) de ladite première batterie (B1) par ladite source principale jusqu'à un niveau de charge déterminé inférieur à un niveau de charge maximal de ladite première batterie, ladite recharge partielle comprenant une fermeture dudit circuit électrique de recharge partielle (CR) de ladite première batterie ; et
- une recharge de saturation de ladite première batterie (B1) par ladite source secondaire (SOL, WND, B2) jusqu'audit niveau de charge maximal, ladite recharge de saturation comprenant une fermeture dudit circuit électrique de recharge de saturation et une ouverture desdits circuits électriques de recharge partielle (CR) et de décharge principale (CD) de ladite première batterie,

ledit procédé étant tel que ledit dispositif consommateur (BTS, HOSP) est alimenté par ladite source principale (N_ELEC, GE), et/ou par ladite source secondaire (SOL, WND, B2), et/ou par une décharge principale d'une dite batterie (B1, B2) ;

ladite décharge principale d'une dite batterie (B1, B2) comprenant une ouverture dudit circuit électrique de recharge partielle (CR) et une fermeture dudit circuit électrique de décharge principale (CD) de cette batterie.

2. Procédé de commande selon la revendication 1 comportant en outre une décharge secondaire de ladite première batterie pour une dite recharge de saturation d'une deuxième batterie dudit ensemble, ladite première batterie constituant une dite source secondaire pour ladite deuxième batterie, ladite décharge secondaire comprend une ouverture dudit circuit de recharge partielle de ladite première batterie, ledit circuit électrique de recharge de saturation de ladite deuxième batterie constituant un circuit électrique de « décharge secondaire » pour ladite première batterie.

3. Procédé de commande selon l'une des revendications 1 ou 2 comprenant :

   - une première séquence comportant une dite recharge de saturation, au moins une dite recharge partielle, et au moins une dite décharge principale, pour ladite première batterie ;
   - une deuxième séquence comportant une dite recharge de saturation, au moins une dite recharge partielle, et au moins une dite décharge principale, pour une desdites batteries, dite troisième batterie ;

   lesdites séquences étant ajustées temporellement pour assurer l'alimentation continue via les circuits de décharge principale desdites première et troisième batteries.

4. Procédé de commande selon l'une des revendications 1 à 3 comprenant en outre, pour au moins une batterie dudit ensemble (E), une séquence cyclique comportant :

   - au moins une dite recharge, partielle ou de saturation, suivie d'une mise au repos ; ou
   - au moins une dite décharge, principale ou secondaire, suivie d'une mise au repos,

   ladite mise au repos comportant une ouverture desdits circuits électriques de ladite batterie.

5. Procédé de commande selon l'une des revendications 1 à 4 comportant en outre une étape d'obtention (E324, E310) d'au moins une information (mes1) représentative d'un état de charge d'une dite batterie (B1) pour déterminer la batterie (B2) en recharge de saturation (E318) ou en recharge partielle (E320) ou en décharge principale (E322).

6. Procédé de commande selon la revendication 5 dans lequel une durée d'activité et une durée d'inactivité de ladite source principale (GE) sont déterminées en fonction de ladite au moins une information (mes1, mes2) représentative de l'état de charge d'une dite batterie (B1, B2).

7. Programme d'ordinateur (Prog) comportant des instructions pour l'exécution d'un procédé de commande selon l'une des revendications 1 à 6 lorsque ledit programme est exécuté par un ordinateur.

8. Support d'enregistrement lisible par un ordinateur sur lequel est enregistré le programme d'ordinateur (Prog) selon la revendication 7.

9. Dispositif (DP) de commande de recharge et de décharge de batteries (B1, B2) d'un ensemble (E) desdites batteries (B1, B2), chacune desdites batteries étant destinée à être reliée à un circuit électrique reliant une source d'alimentation, dite source principale, à un dispositif consommateur pour former :

   - un circuit électrique commandable (CR) dit de recharge partielle reliant ladite batterie à ladite source principale (GE) ; et
   - un circuit électrique commandable (CD) dit de décharge principale reliant ladite batterie audit dispositif consommateur (BTS) et réalisant une fonction diode pour éviter un courant de circulation entre les batteries,

      ladite source principale pouvant produire de l'électricité d'une façon intermittente ;
      au moins une première batterie (B1) dudit ensemble étant destinée à être reliée à une autre source d'alimentation (SOL, WND, B2), dite source secondaire, par un circuit électrique commandable dit de recharge de saturation, ledit dispositif de commande (DP) comportant un module de couplage (DC) configuré pour commander:

   - une recharge partielle de ladite première batterie (B1) par ladite source principale jusqu'à un niveau de charge déterminé inférieur à un niveau de charge maximal de ladite première batterie, ladite recharge partielle comprenant une fermeture dudit circuit électrique de recharge partielle (CR) de ladite première batterie ;
   - une recharge de saturation de ladite première batterie (B1) par ladite source secondaire (SOL, WND, B2) jusqu'audit niveau de charge maximal, ladite recharge de saturation comprenant une fermeture dudit circuit électrique de recharge de saturation et une ouverture desdits circuits électriques de recharge partielle (CR) et de décharge principale (CD) de ladite première batterie; et

- une décharge principale d'une dite batterie (B1, B2) comprenant une ouverture dudit circuit électrique de recharge partielle (CR) et une fermeture dudit circuit électrique de décharge principale (CD) de cette batterie,

ledit dispositif de commande étant configuré pour alimenter ledit dispositif consommateur (BTS, HOSP) par ladite source principale (N-ELEC, GE) et/ou par ladite source secondaire (SOL, WND), et/ou par une décharge principale d'une dite batterie (B1, B2).

10. Dispositif (DP) de commande selon la revendication 9 comportant en outre un module de surveillance (GET-MES) configuré pour obtenir au moins une information (mes1, mes 2) représentative d'un état de charge d'une dite batterie, pour déterminer ladite batterie à recharger ou à décharger.

11. Dispositif (DP) de commande selon l'une des revendications 9 ou 10 comportant en outre un module de contrôle (CONT) configuré pour contrôler un état d'activité de ladite source principale (GE).

12. Dispositif (DP) de commande selon l'une des revendications 9 à 11 **caractérisé en ce que** ledit module de couplage est configuré en outre pour commander une mise au repos d'une dite batterie, ladite mise au repos comprend une ouverture desdits circuits électriques de ladite batterie.

13. Système de commande de recharge et de décharge de batteries d'un ensemble desdites batteries (B1, B2, B3), chacune desdites batteries étant reliée à un circuit électrique reliant une source d'alimentation, dite source principale (GE, N_ELEC), à un dispositif consommateur (BTS) pour former :

- un circuit électrique commandable (CR) dit de recharge partielle reliant ladite batterie à ladite source principale (GE) ; et
- un circuit électrique commandable (CD) dit de décharge principale reliant ladite batterie audit un dispositif consommateur (BTS, HOSP) et réalisant une fonction diode pour éviter un courant de circulation entre les batteries; ladite source principale pouvant produire de l'électricité d'une façon intermittente, au moins une batterie (B1) dudit ensemble étant reliée à une autre source d'alimentation (N-ELEC, SOL, WND, B2), dite source secondaire, par un circuit électrique commandable dit de recharge de saturation, ledit système comportant:

- un dispositif de commande (DP) dudit ensemble selon l'une des revendications 9 à 12 ;
- ladite source principale (GE);
- ladite source secondaire (SOL, WND, B2); et
- ledit dispositif consommateur (BTS).

14. Système de commande selon la revendication 13 dans lequel ladite source principale est un groupe électrogène (GE) ou un réseau électrique.

15. Système de commande selon l'une des revendications 13 à 14 dans lequel ladite source secondaire est :

- une source pouvant produire de l'électricité à partir d'une énergie renouvelable (SOL, WND); ou
- une dite batterie en décharge secondaire.

**Patentansprüche**

1. Steuerverfahren zum Auf- und Entladen von Batterien (B1, B2) eines Satzes (E) der Batterien (B1, B2), wobei jede der Batterien mit einem elektrischen Schaltkreis verbunden ist, der eine Hauptquelle genannte Versorgungsquelle mit einer Verbrauchervorrichtung verbindet, um zu bilden:

- einen steuerbaren elektrischen sogenannten "Teilauflade"-Schaltkreis (CR), der die Batterie mit der Hauptquelle (N-ELEC, GE) verbindet; und
- einen steuerbaren elektrischen sogenannten "Hauptentlade"-Schaltkreis (CD), der die Batterie mit der Verbrauchervorrichtung (BTS, HOSP) verbindet und eine Diodenfunktion realisiert, um einen Ausgleichsstrom zwischen den Batterien zu vermeiden,
wobei die Hauptquelle intermittierend eine elektrische Energie erzeugen kann;
wobei mindestens eine erste Batterie (B1) des Satzes durch einen steuerbaren elektrischen sogenannten "Sättigungsauflade"-Schaltkreis mit einer Sekundärquelle genannten anderen Versorgungsquelle (SOL, WND, B2) verbunden ist;
das Verfahren enthält:

- eine Teilaufladung (E320) der ersten Batterie (B1) durch die Hauptquelle bis zu einem bestimmten Ladepegel niedriger als ein maximaler Ladepegel der ersten Batterie, wobei die Teilaufladung ein Schließen des elektrischen Teilaufladeschaltkreises (CR) der ersten Batterie enthält; und
- eine Sättigungsaufladung der ersten Batterie (B1) durch die Sekundärquelle (SOL, WND, B2) bis zum maximalen Ladepegel, wobei die Sättigungsaufladung ein Schließen des elektrischen Sättigungsaufladeschaltkreises und ein Öffnen der elektrischen Teilauflade- (CR) und Hauptentladeschaltkreise (CD) der ersten Batterie enthält,

wobei das Verfahren derart ist, dass die Verbrauchervorrichtung (BTS, HOSP) von der Hauptquelle (N_ELEC, GE) und/oder von der Sekundärquelle (SOL, WND, B2) und/oder von einer Hauptentladung einer Batterie (B1, B2) versorgt wird; wobei die Hauptentladung einer Batterie (B1, B2) ein Öffnen des elektrischen Teilaufladeschaltkreises (CR) und ein Schließen des elektrischen Hauptentladeschaltkreises (CD) dieser Batterie enthält.

2. Steuerverfahren nach Anspruch 1, das außerdem eine Sekundärentladung der ersten Batterie für eine Sättigungsaufladung einer zweiten Batterie des Satzes aufweist, wobei die erste Batterie eine Sekundärquelle für die zweite Batterie bildet, wobei die Sekundärentladung ein Öffnen des Teilaufladeschaltkreises der ersten Batterie enthält, wobei der elektrische Sättigungsaufladeschaltkreis der zweiten Batterie einen elektrischen "Sekundärentlade"- Schaltkreis für die erste Batterie bildet.

3. Steuerverfahren nach einem der Ansprüche 1 oder 2, das enthält:

    - eine erste Folge, die eine Sättigungsaufladung, mindestens eine Teilaufladung und mindestens eine Hauptentladung für die erste Batterie aufweist;
    - eine zweite Folge, die eine Sättigungsaufladung, mindestens eine Teilaufladung und mindestens eine Hauptentladung für eine der Batterien aufweist, dritte Batterie genannt;

wobei die Folgen zeitlich angepasst werden, um die durchgehende Versorgung der ersten und dritten Batterien über die Hauptentladeschaltkreise zu gewährleisten.

4. Steuerverfahren nach einem der Ansprüche 1 bis 3, das außerdem für mindestens eine Batterie des Satzes (E) eine zyklische Folge enthält, die aufweist:

    - mindestens eine Teil- oder Sättigungsaufladung, gefolgt von einer Stilllegung; oder
    - mindestens eine Haupt- oder Sekundärentladung, gefolgt von einer Stilllegung,

wobei die Stilllegung ein Öffnen der elektrischen Schaltkreise der Batterie aufweist.

5. Steuerverfahren nach einem der Ansprüche 1 bis 4, das außerdem einen Schritt des Erhalts (E324, E310) mindestens einer für einen Ladezustand einer Batterie (B1) repräsentativen Information (mesl) aufweist, um zu ermitteln, ob die Batterie (B2) in Sättigungsaufladung (E318) oder in Teilaufladung (E320) oder in Hauptentladung (E322) ist.

6. Steuerverfahren nach Anspruch 5, wobei eine Aktivitätsdauer und eine Inaktivitätsdauer der Hauptquelle (GE) abhängig von der für den Ladezustand einer Batterie (B1, B2) repräsentativen mindestens einen Information (mesl, mes2) ermittelt werden.

7. Computerprogramm (Prog), das Anweisungen für die Ausführung eines Steuerverfahrens nach einem der Ansprüche 1 bis 6 aufweist, wenn das Programm von einem Computer ausgeführt wird.

8. Computerlesbarer Speicherträger, auf dem das Computerprogramm (Prog) nach Anspruch 7 gespeichert ist.

9. Vorrichtung (DP) zur Auflade- und Entladesteuerung von Batterien (B1, B2) eines Satzes (E) der Batterien (B1, B2), wobei jede der Batterien dazu bestimmt ist, mit einem elektrischen Schaltkreis verbunden zu werden, der eine Hauptquelle genannte Versorgungsquelle mit einer Verbrauchervorrichtung verbindet, um zu bilden:

    - einen steuerbaren elektrischen sogenannten Teilaufladeschaltkreis (CR), der die Batterie mit der Hauptquelle (GE) verbindet; und
    - einen steuerbaren elektrischen sogenannten Hauptentladeschaltkreis (CD), der die Batterie mit der Verbrauchervorrichtung (BTS) verbindet und eine Diodenfunktion realisiert, um einen Ausgleichsstrom zwischen den Batterien zu vermeiden,

wobei die Hauptquelle intermittierend Elektrizität erzeugen kann; wobei mindestens eine erste Batterie (B1) des Satzes dazu bestimmt ist, durch einen steuerbaren elektrischen sogenannten Sättigungsaufladeschaltkreis mit einer Sekundärquelle genannten anderen Versorgungsquelle (SOL, WND, B2) verbunden zu werden, wobei die Steuervorrichtung (DP) ein Kopplungsmodul (DC) aufweist, das konfiguriert ist, zu steuern:

    - eine Teilaufladung der ersten Batterie (B1) durch die Hauptquelle bis zu einem bestimmten Ladepegel niedriger als ein maximaler Ladepegel der ersten Batterie, wobei die Teilaufladung ein Schließen des elektrischen Teilaufladeschaltkreises (CR) der ersten Batterie enthält;
- eine Sättigungsaufladung der ersten Batterie (B1) durch die Sekundärquelle (SOL, WND, B2) bis zum maximalen Ladepegel, wobei die Sättigungsaufladung ein Schließen des elektrischen Sättigungsaufladeschaltkreises und ein Öffnen der elektrischen Teilauflade- (CR) und Hauptentladeschaltkreise (CD) der ersten Batterie enthält; und
- eine Hauptentladung einer Batterie (B1, B2), die ein Öffnen des elektrischen Teilaufladeschaltkreises (CR) und ein Schließen des elektrischen Hauptentladeschaltkreises (CD) dieser Batterie enthält,

wobei die Steuervorrichtung konfiguriert ist, die Verbrauchervorrichtung (BTS, HOSP) durch die Hauptquelle (N-ELEC, GE) und/oder durch die Sekundärquelle (SOL, WND) und/oder durch eine Hauptentladung einer Batterie (B1, B2) zu versorgen.

10. Steuervorrichtung (DP) nach Anspruch 9, die außerdem ein Überwachungsmodul (GET-MES) aufweist, das konfiguriert ist, mindestens eine für einen Ladezustand einer Batterie repräsentative Information (mesl, mes2) zu erhalten, um die aufzuladende oder zu entladende Batterie zu ermitteln.

11. Steuervorrichtung (DP) nach einem der Ansprüche 9 oder 10, die außerdem ein Kontrollmodul (CONT) aufweist, das konfiguriert ist, einen Aktivitätszustand der Hauptquelle (GE) zu kontrollieren.

12. Steuervorrichtung (DP) nach einem der Ansprüche 9 bis 11, **dadurch gekennzeichnet, dass** das Kopplungsmodul außerdem konfiguriert ist, eine Stilllegung einer Batterie zu steuern, wobei die Stilllegung ein Öffnen der elektrischen Schaltkreise der Batterie enthält.

13. Steuersystem zum Aufladen und Entladen von Batterien eines Satzes der Batterien (B1, B2, B3), wobei jede der Batterien mit einem elektrischen Schaltkreis verbunden ist, der eine Hauptquelle genannte Versorgungsquelle (GE, N_ELEC) mit einer Verbrauchervorrichtung (BTS) verbindet, um zu bilden:

- einen steuerbaren elektrischen sogenannten Teilaufladeschaltkreis (CR), der die Batterie mit der Hauptquelle (GE) verbindet; und
- einen steuerbaren elektrischen sogenannten Hauptentladeschaltkreis (CD), der die Batterie mit der einen Verbrauchervorrichtung (BTS, HOSP) verbindet und eine Diodenfunktion realisiert, um einen Ausgleichsstrom zwischen den Batterien zu vermeiden;

wobei die Hauptquelle intermittierend Elektrizität erzeugen kann,
wobei mindestens eine Batterie (B1) des Satzes durch einen steuerbaren elektrischen sogenannten Sättigungsaufladeschaltkreis mit einer anderen Se-kundärquelle genannte Versorgungsquelle (N-ELEC, SOL, WND, B2) verbunden ist, wobei das System aufweist:

- eine Steuervorrichtung (DP) des Satzes nach einem der Ansprüche 9 bis 12;
- die Hauptquelle (GE);
- die Sekundärquelle (SOL, WND, B2); und
- die Verbrauchervorrichtung (BTS).

14. Steuersystem nach Anspruch 13, wobei die Hauptquelle ein Stromerzeuger (GE) oder ein Stromnetz ist.

15. Steuersystem nach einem der Ansprüche 13 bis 14, wobei die Sekundärquelle ist:

- eine Quelle, die ausgehend von einer erneuerbaren Energie (SOL, WND) Elektrizität erzeugen kann; oder
- eine Batterie in Sekundärentladung.

## Claims

1. Method for controlling the charging and discharging of batteries (B1, B2) of a set (E) of said batteries (B1, B2), each of said batteries being connected to an electrical circuit connecting a power source, called the main source, to a consumer device so as to form:

- a controllable electrical circuit (CR) called the "partial charging" circuit connecting said battery to said main source (N-ELEC, GE); and
- a controllable electrical circuit (CD) called the "main discharging" circuit connecting said battery to said consumer device (BTS, HOSP) and performing a diode function in order to prevent a current from flowing between the batteries, said main source being capable of generating electrical energy intermittently;

at least a first battery (B1) of said set being connected to another power source (SOL, WND, B2), called the secondary source, by a controllable electrical circuit called the "saturation charging" circuit;
said method comprises:

- partially charging (E320) said first battery (B1) by means of said main source up to a determined level of charge lower than a maximum level of charge of said first battery, said partial charging comprising closing said partial charging electrical circuit (CR) of said first battery; and
- saturation charging said first battery (B1) by means of said secondary source (SOL, WND, B2) up to said maximum level of charge, said saturation charging comprising closing said saturation charging electrical circuit and opening said partial charging (CR) and main discharging (CD) electrical circuits of said first battery,

said method being such that said consumer device (BTS, HOSP) is supplied with power by said main source (N_ELEC, GE), and/or by said secondary source (SOL, WND, B2), and/or by means of a main discharging of one said battery (B1, B2); said main discharging of one said battery (B1, B2) comprising opening said partial charging electrical circuit (CR) and closing said main discharging electrical circuit (CD) of this battery.

2. Control method according to Claim 1, further comprising a secondary discharging of said first battery for one said saturation charging of a second battery of said set, said first battery constituting one said secondary source for said second battery, said secondary discharging comprises opening said partial charging circuit of said first battery, said saturation charging electrical circuit of said second battery constituting a "secondary discharging" electrical circuit for said first battery.

3. Control method according to either of Claims 1 and 2, comprising:

   - a first sequence comprising one said saturation charging, at least one said partial charging, and at least one said main discharging, for said first battery;
   - a second sequence comprising one said saturation charging, at least one said partial charging, and at least one said main discharging, for one of said batteries, called the third battery; said sequences being temporally adjusted so as to ensure the continuous power supply via the main discharging circuits of said first and third batteries.

4. Control method according to one of Claims 1 to 3, further comprising, for at least one battery of said set (E), a cyclic sequence comprising:

   - at least one said charging, partial or saturation, followed by a rest; or
   - at least one said discharging, main or secondary, followed by a rest, said rest comprising opening said electrical circuits of said battery.

5. Control method according to one of Claims 1 to 4, further comprising a step of obtaining (E324, E310) at least one item of information (mesl) representative of a state of charge of one said battery (B1) in order to determine whether the battery (B2) is in saturation charging (E318) or in partial charging (E320) or in main discharging (E322) mode.

6. Control method according to Claim 5, wherein a duration of activity and a duration of inactivity of said main source (GE) are determined according to said at least one item of information (mesl, mes2) representative of the state of charge of one said battery (B1, B2).

7. Computer program (Prog) comprising instructions for executing a control method according to one of Claims 1 to 6 when said program is executed by a computer.

8. Computer-readable storage medium on which the computer program (Prog) according to Claim 7 is stored.

9. Device (DP) for controlling the charging and discharging of batteries (B1, B2) of a set (E) of said batteries (B1, B2), each of said batteries being intended to be connected to an electrical circuit connecting a power source, called the main source, to a consumer device so as to form:

   - a controllable electrical circuit (CR) called the "partial charging" circuit connecting said battery to said main source (GE); and
   - a controllable electrical circuit (CD) called the "main discharging" circuit connecting said battery to said consumer device (BTS) and performing a diode function in order to prevent a current from flowing between the batteries, said main source being capable of generating electricity intermittently;

at least a first battery (B1) of said set being intended to be connected to another power source (SOL, WND, B2), called the secondary source, by a controllable electrical circuit called the "saturation charging" circuit, said control device (DP) comprising a coupling module (DC) configured to control:

   - a partial charging of said first battery (B1) by means of said main source up to a determined level of charge lower than a maximum level of charge of said first battery, said partial charging comprising closing said partial charging electrical circuit (CR) of said first battery;
   - a saturation charging of said first battery (B1) by means of said secondary source (SOL, WND, B2) up to said maximum level of charge, said saturation charging comprising closing said saturation charging electrical circuit and opening said partial charging (CR) and main discharging (CD) electrical circuits of said first battery; and
- a main discharging of one said battery (B1, B2) comprising opening said partial charging electrical circuit (CR) and closing said main discharging electrical circuit (CD) of this battery,

said control device being configured to supply said consumer device (BTS, HOSP) with power by means of said main source (N-ELEC, GE) and/or by means of said secondary source (SOL, WND), and/or by means of a main discharging of one said battery (B1, B2).

10. Control device (DP) according to Claim 9, further comprising a monitoring module (GET-MES) configured to obtain at least one item of information (mesl, mes2) representative of a state of charge of one said battery, in order to determine whether said battery is to be charged or to be discharged.

11. Control device (DP) according to either of Claims 9 and 10, further comprising a supervising module (CONT) configured to supervise a state of activity of said main source (GE).

12. Control device (DP) according to one of Claims 9 to 11, **characterized in that** said coupling module is further configured to control a resting of one said battery, said resting comprises opening said electrical circuits of said battery.

13. System for controlling the charging and discharging of batteries of a set of said batteries (B1, B2, B3), each of said batteries being connected to an electrical circuit connecting a power source, called the main source (GE, N_ELEC), to a consumer device (BTS) so as to form:

- a controllable electrical circuit (CR) called the "partial charging" circuit connecting said battery to said main source (GE); and
- a controllable electrical circuit (CD) called the "main discharging" circuit connecting said battery to said one consumer device (BTS, HOSP) and performing a diode function in order to prevent a current from flowing between the batteries;

said main source being capable of generating electricity intermittently;
at least one battery (B1) of said set being connected to another power source (N-ELEC, SOL, WND, B2), called the secondary source, by a controllable electrical circuit called the "saturation charging" circuit, said system comprising:

- a device (DP) for controlling said set according to one of Claims 9 to 12;
- said main source (GE);
- said secondary source (SOL, WND, B2); and
- said consumer device (BTS).

14. Control system according to Claim 13, wherein said main source is a generator set (GE) or an electrical network.

15. Control system according to either of Claims 13 and 14, wherein said secondary source is:

- a source capable of generating electricity from renewable energy (SOL, WND); or
- one said battery in secondary discharging mode.

[Fig. 1]

ART ANTERIEUR

[Fig. 2]

[Fig. 3]

E300 — init i,init info-disp

E302 — info-disp ?
- non
- oui

E320 — Bi UP
E322 — (E\Bi) PAUSE

E324 — Rx (MESi = NR$_{MIN}$)

E326 — nC[ i ] = nC[ i ] + 1

E328 — Tx Set-OFF à GE

E330
- i = n ?
  - oui → i → 1
  - i → i + 1

E304 — nC[ n-i+1 ] = nC max ?
- oui
- non

E314 — nC[ n-i + 1 ] → 0
E318 — (E\Bi) UP$_{MAX}$
E316 — Bi DOWN

E306 — Bi DOWN
E308 — (E\Bi) PAUSE

E310 — Rx (MESi = ND$_{MIN}$)

E312 — Tx Set-ON à GE

[Fig. 4]

[Fig. 5]

[Fig. 6]

[Fig. 7]

[Fig. 8]

[Fig. 9]

[Fig. 10]

[Fig. 11]

[Fig. 12]